# EUROPÄISCHE PATENTSCHRIFT

(11) **EP 4 045 255 B1**
(45) Veröffentlichungstag und Bekanntmachung des Hinweises auf die Patenterteilung: **06.09.2023**
(21) Anmeldenummer: 20786292.1
(22) Anmeldetag: 05.10.2020
(51) Int. Cl.: B29C 33/06, B29C 35/08, B29C 44/44, B29C 67/20, C08J 9/232

(54) **WERKZEUG, WERKZEUGSYSTEM UND VERFAHREN ZUM HERSTELLEN VON PARTIKELSCHAUMSTOFFTEILEN**
MOLD, MOLD SYSTEM AMD PROCESS FOR MANUFACTUIRNG PRODUCTS FROM FOAMY PARTICLES
MOULE, SYSTÈME DE MOULE ET PROCÉDÉ DE FABRICATION DES PIÈCES EN FORME DE PARTICLES MOUSEUX

(30) Priorität: 15.10.2019 DE 102019127680
(43) Veröffentlichungstag der Anmeldung: 24.08.2022
(73) Patentinhaber: Kurtz GmbH & Co. KG, 97892 Kreuzwertheim (DE)
(72) Erfinder: ROMANOV, Victor, 97877 Wertheim (DE)
(74) Vertreter: HGF
(86) Internationale Anmeldenummer: PCT/EP2020/077858
(87) Internationale Veröffentlichungsnummer: WO 2021/073924

(56) Entgegenhaltungen:
- DE-A1-102016 123 214
- DE-A1-102017 128 895
- US-A1- 2014 243 442

## Beschreibung

Die vorliegende Erfindung betrifft ein Werkzeug, ein Werkzeugsystem und ein Verfahren zum Herstellen von Partikelschaumstoffteilen.

Das Werkzeug und das Werkzeugsystem zum Herstellen von Partikelschaumstoffteilen sind zum Herstellen der Partikelschaumstoffteile unter Verwendung von elektromagnetischen Wellen vorgesehen, wobei mittels der elektromagnetischen Wellen Schaumstoffpartikel zu einem Partikelschaumstoffteil verschweißt werden. Die zum Verschweißen notwendige Energie wird mittels der elektromagnetischen Wellen an die Schaumstoffpartikel angelegt.

Seit langem wird versucht, Schaumstoffpartikel mittels elektromagnetischer Wellen zu Partikelschaumstoffteilen zu verschweißen. So gehen entsprechende Verfahren beispielsweise aus der US 3,079,723, der US 3,242,238 und der GB 1,403,326 hervor.

In der US 3,079,723 ist ein Verfahren zum Sintern von feuchten thermoplastischen Schaumstoffpartikeln beschrieben. Die Partikel werden dielektrisch erhitzt und gleichzeitig in der Form komprimiert. Es werden elektromagnetische Wellen mit einer Frequenz von etwa 2 bis 1000 MHz angelegt.

Ein ähnliches Verfahren geht aus der US 3,242,238 hervor, bei welchem Schaumstoffpartikel mit einer wässrigen Lösung befeuchtet werden und einem elektromagnetischen Feld mit einer Frequenz von etwa 5 bis 100 MHz ausgesetzt sind.

In der GB 1,403,326 ist ein Verfahren zum Verschweißen von expandierbaren Polystyrolschaumstoffpartikeln beschrieben, bei welchem die Partikel mit einer wässrigen Lösung befeuchtet werden und einem elektromagnetischen Feld von 5 bis 2000 MHz ausgesetzt werden.

Auch in den letzten Jahrzehnten gab es erhebliche Anstrengungen, Schaumstoffpartikel mittels elektromagnetischer Wellen zu verschweißen. So sind entsprechende Verfahren in der WO 01/064414 A1 und der WO 2013/050581 A1 beschrieben.

Aus der WO 01/064414 A1 geht ein Verfahren hervor, bei dem Polymerpartikel aus Polyolefinen, die mit einem flüssigen Medium benetzt sind, mit elektromagnetischen Wellen, insbesondere Mikrowellen, erhitzt werden. Hierbei wird die Temperatur im Formwerkzeug mittels Steuern des darin befindlichen Druckes geregelt.

In der WO 2013/050181 A1 ist ein Verfahren zur Herstellung von Partikelschaumstoffteilen beschrieben, bei welchen eine Mischung aus Schaumstoffpartikeln und dielektrischer Transferflüssigkeit mittels elektromagnetischer Wellen erhitzt wird, um die Schaumstoffpartikel zu einem Partikelschaumstoffteil zu verschmelzen. Als elektromagnetische Wellen werden Radiowellen oder Mikrowellen verwendet. Das Material der Schaumstoffpartikel ist aus Polypropylen (PP) ausgebildet. Hier wie auch in der DE 10 2016 123 214 A1 und DE 10 2017 128 895 A1 sind die Formhälften als Vollkörper ausgebildet.

Trotz dieser seit langem anhaltenden erheblichen Anstrengungen gibt es am Markt keine Maschinen, mit welchen Schaumstoffpartikel mittels elektromagnetischer Wellen verschweißt werden. In der kommerziellen Benutzung sind ausschließlich Maschinen, welche die Schaumstoffpartikel mittels Dampf verschweißen.

Es gibt keine serienreifen Maschinen zum Verschweißen von Schaumstoffpartikeln, obwohl die hiermit verbunden Vorteile seit langem bekannt sind. Dies sind vor allem
- ein effizienterer Energieeintrag,
- nach dem Verschweißen sind die Partikelschaumstoffteile trocken und können sofort weiter verarbeitet werden,
- das Erhitzen erfolgt von innen nach außen, so dass der Innenbereich der Schaumstoffpartikel wesentlich besser verschweißt werden kann, und
- die Geräte zur Erzeugung von Dampf entfallen, welche im Vergleich zu einem Generator für elektromagnetische Wellen wesentlich aufwändiger sind.

Die Anmelderin der vorliegenden Patentanmeldung hat die Vorrichtungen zum Verschweißen von Schaumstoffpartikeln mittels elektromagnetischer Wellen und die entsprechenden Verfahren derart weiterentwickelt, dass sie in der Lage ist, größere Stückzahlen von Schaumstoffpartikeln mittels seriennaher Prototypen durch Verschweißen der Schaumstoffpartikel mittels elektromagnetischer Wellen herzustellen. Diese Vorrichtungen und Verfahren beruhen auf der in der WO 2017/127310 A1, WO 2017/127312 A1 und WO 2018/100173 A2 beschriebenen Technologie, die insoweit in ihrem Offenbarungsgehalt auch im Zusammenhang mit der nachstehend beschriebenen Erfindung vollumfänglich, und insbesondere die Vorrichtungen und Verfahren sowie Materialien betreffend, ergänzend, aber nicht ausschließlich, in Bezug genommen werden.

Hiermit ist es gelungen, eine gleichmäßige Verschweißung in Partikelschaumstoffteilen mit unterschiedlicher Form zu erzielen. Je komplexer die Form des Partikelschaumstoffteils ist, desto schwieriger ist es, die Schaumstoffpartikel gleichmäßig zu verschweißen. Seit Jahrzehnten ist es bekannt, dass man derartige Schaumstoffpartikel in einem Plastikbecher mit etwas Wasser in ein herkömmliches Haushaltsmikrowellengerät stellen kann und man damit eine gute, gleichmäßige Verschweißung erzielt. Sind die herzustellenden Partikelschaumstoffteile jedoch größer oder komplexer geformt oder stark konturiert oder mit unregelmäßiger Dicke (gemessen in einer Richtung senkrecht zu den Kondensatorplatten, d.h., in Ausbreitungsrichtung des elektromagnetischen Feldes), dann ist es schwierig, an allen Stellen eine gleichmäßige Verteilung des elektromagnetischen Feldes zu erzielen. Die Probleme haben unterschiedlichste Ursachen. Einerseits haben elektromagnetische Wellen prinzipbedingt nicht überall die gleiche Energiedichte. Je kürzer die Wellenlänge ist, desto größer sind die lokalen Schwankungen. Andererseits werden die elektromagnetischen Wellen durch das Material des Werkzeuges, das das Formnest begrenzt, beeinflusst. Hier gibt es unterschiedliche Effekte. Einerseits kann ein Teil der Energie der elektromagnetischen Wellen durch das Material des Formwerkzeugs absorbiert werden. Andererseits fungiert dieses Material als Dielektrikum, das derart polarisiert wird, dass es ein zu den elektromagnetischen Wellen entgegengesetztes elektromagnetisches Feld erzeugt. Hierdurch wird die Energiedichte der elektromagnetischen Wellen verschoben und kann lokal im Formnest konzentriert werden. Dies haben die Erfinder der vorliegenden Erfindung erstmals bei der Entwicklung der vorliegenden Erfindung berücksichtigt.

Weiterhin kann auch das Material, aus dem die Schaumstoffpartikel ausgebildet sind, einen Einfluss auf das elektromagnetische Feld haben, so dass bei Verwendung von unterschiedlichen Materialien dasselbe Werkzeug unterschiedlich wirkt.

Beim RF-Schäumen von komplexen Geometrien ist es daher erstrebenswert, wenn das elektrische Feld in allen Bereichen des Formteils möglichst konstant oder gleichmäßig ist. Es gibt Ansätze, dies beispielsweise mit Verformung von Elektroden und Variation von Werkzeugwandstärken zu erreichen. Das ist aber mit der Anwendung von sehr komplexen Simulationsprogrammen verbunden. Die Schwierigkeit liegt dabei daran, dass sich die relative Permittivität von Werkzeugmaterial und Partikelschaum stark unterscheiden, beispielsweise um einen Faktor 2 bis 5.

Ein weiteres Problem besteht darin, dass es praktisch unmöglich ist, die Werkzeuge zum RF-Schäumen nachträglich zu optimieren, wenn beispielsweise das elektrische Feld in manchen Bereichen verstärkt werden soll.

Da die Erwärmung mit einem RF-Feld von innen nach außen geht, wird die Verschweißung von äußeren Partikelschichten schlechter als im Kern, und die Oberfläche kann rau bleiben. Um dieses zu verbessern wurden bisher Heiz- und Kühlkanäle im Werkzeug vorgesehen.

Aus verfahrenstechnischen Gründen kann es sinnvoll sein, wenn die Schaumpartikel mit Wasser als Wärmeübertragungsmedium versetzt in das Formnest eingebracht werden. Beim Verschweißen kann das Wasser dann aus dem Formnest gedrückt werden. Dadurch kann sich die mittlere relative Permittivität im Formnest ändern und damit auch die lokale elektrische Feldstärke. Die Steuerung eines solchen Prozesses ist schwierig.

In einer Vorrichtung zum Herstellen von Partikelschaumstoffteilen will man unterschiedliche Partikelschaumstoffteile herstellen. Hierzu muss man die entsprechenden Werkzeuge, welche ein Formnest definieren, in dem die Partikelschaumstoffteile ausgeformt werden, austauschen. Dies ist bereits von herkömmlichen Vorrichtungen zum Herstellen von Partikelschaumstoffteilen, welche die Schaumstoffpartikel mittels Dampf verschweißen, hinlänglich bekannt. Die Erfinder der vorliegenden Erfindung haben jedoch erkannt, dass anders als beim Verschweißen von Schaumstoffpartikel mittels Dampf beim Verschweißen mittels elektromagnetischer Wellen die Funktion eines Werkzeuges von der Form abhängt, welche durch die Form des herzustellenden Partikelschaumstoffteils vorgegeben ist. Dies ist auch eine der Hauptursachen, wieso es trotz intensivster Versuche und Entwicklungsanstrengungen seit Jahrzehnten nie gelungen ist, Vorrichtungen zum Verschweißen von Partikelschaumstoffteilen, insbesondere solcher mit einer unregelmäßigen Form oder Dicke oder starker Konturierung, mittels elektromagnetischer Wellen zu entwickeln, die für eine Serienproduktion geeignet sind.

Der Erfindung liegt deshalb die Aufgabe zugrunde, ein Werkzeug zum Herstellen von Partikelschaumstoffteilen, sowie ein entsprechendes Werkzeugsystem zu schaffen, mit welchen auf einfache Art und Weise Schaumstoffpartikel mittels elektromagnetischer Wellen zuverlässig in hoher Qualität verschweißt werden können.

Eine Aufgabe der vorliegenden Erfindung ist es insbesondere, ein Werkzeug, ein Werkzeugsystem und ein Verfahren anzugeben, das die oben genannten Nachteile und Probleme vermeidet oder zumindest verbessert.

Eine weitere Aufgabe der vorliegenden Erfindung ist es, eine Möglichkeit zur nachträglichen Optimierung eines solchen Werkzeuges zu schaffen.

Eine weitere Aufgabe der vorliegenden Erfindung ist es, ein Werkzeug, ein Werkzeugsystem und ein Verfahren im Hinblick auf eine gleichmäßige Qualität der Verschweißung im Querschnitt des Partikelschaumstoffteils zu verbessern.

Eine weitere Aufgabe der vorliegenden Erfindung ist es, eine Möglichkeit zu schaffen, eine Änderung der relativen Permittivität im Formnest während des Schäumvorgangs auszugleichen und/oder das im Formnest vorherrschende elektromagnetische Feld, insbesondere im Hinblick auf die elektrische Feldstärke, während des Schäumvorgangs zu beeinflussen.

Eine oder mehrere der genannten Aufgaben werden durch die Gegenstände der unabhängigen Patentansprüche gelöst. Vorteilhafte Ausgestaltungen sind in den jeweiligen Unteransprüchen angegeben.

Das erfindungsgemäße Werkzeug zum Herstellen von Partikelschaumstoffteilen durch Verschweißen von Schaumstoffpartikel mittels elektromagnetischer Wellen umfasst zwei Formhälften, welche ein Formnest begrenzen. Wenigstens eine der beiden Formhälften ist aus einem für elektromagnetische Wellen transparenten Material ausgebildet und weist eine das Formnest begrenzende Begrenzungswandung und eine oder mehrere Stützen auf, welche zum Abstützen der Begrenzungswandung an einer Kondensatorplatte auf der vom Formnest weg weisenden Seite dienen und einen oder mehrere Hohlräume der Formhälfte ausbilden.

Durch die Ausbildung der Hohlräume auf der von dem Formnest abgewandten Seite der Begrenzungswandung können Formhälften beliebiger Formen mit einem Minimum an Material verwirklicht werden. Daher kann die Beeinflussung des elektromagnetischen Feldes im Formnest durch das Material der Formhälfte begrenzt werden. Überraschenderweise hat sich bei Simulationen wie Versuchen herausgestellt, dass die Stützen kaum bis keine Diskontinuitäten oder Inhomogenitäten der Feldstärke im Formnest bewirken. Vielmehr mittelt sich die Feldstärke zwischen Bereichen, die den Stützen entsprechen, und Bereichen, die den Hohlräumen entsprechen, aus, und diese Mittelung oder Gleichmäßigkeit setzt sich in das Formnest fort. Mit anderen Worten liegt eine Mittelung der Permittivitäten des Materials der Formhälften und der in den Hohlräumen enthaltenen Luft vor, die überraschend homogen ist, selbst wenn das Material der Formhälfte in die darin befindlichen Hohlräume nicht homogen verteilt sind. Die Formhälften werden daher vorzugsweise so ausgebildet, dass sie eine mittlere Permittivität aufweisen, die etwa der Permittivität der zu verschweißenden Schaumstoffpartikel entspricht. Dies ergibt ein sehr homogenes elektrisches Feld, selbst, wenn das Formnest komplex konturiert ist.

Daher lassen sich auf einfache Weise Formhälften mit ähnlichen dielektrischen Eigenschaften wie der herzustellende Gegenstand verwirklichen. Insbesondere ist eine Abstimmung der dielektrischen Eigenschaften der Formhälfte an das Partikelschaumstoffteil in überraschend einfacher Weise möglich. Wenn die dielektrischen Eigenschaften der Formhälfte in etwa denen des Partikelschaumstoffteils entsprechen, hat das auch den Vorteil, dass das elektromagnetische Feld im gesamten Bereich zwischen den Kondensatorplatten annähernd homogen ist, unabhängig von der Formgestaltung der Formhälfte bzw. des Partikelschaumstoffteils.

Das Abstützen der Kondensatorplatte durch die Stützen kann unmittelbar oder mittelbar (also mit einer Zwischenlage) erfolgen. Die Stützen können durch Seitenwände und/oder Zwischenwände realisiert sein. Die Begrenzungswandung und die Stützen können einteilig, insbesondere monolithisch ausgebildet sein. Bei manchen Formen bildet eine Kondensatorplatte bereits eine Begrenzung des Formnests. Natürlich ist es ebenso möglich, dass jede der beiden Formhälften aus dem für elektromagnetische Wellen transparenten Material ausgebildet ist und die Begrenzungswandung und die Stütze/n aufweist.

Vorzugsweise ist die Begrenzungswandung der wenigstens einen Formhälfte mit im Wesentlichen konstanter Dicke ausgebildet.

Die Stützen der wenigstens einen Formhälfte verlaufen vorzugsweise parallel zu einer Pressrichtung, mit welcher die Formhälften im Betrieb mit einer Presse zusammengedrückt werden.

Die Formhälften können Anschlüsse für ein Temperiermedium aufweisen, das durch den einen oder die mehreren Hohlräume strömen kann.

Die wenigstens eine der beiden Formhälften kann zum Trimmen der Formhälfte mittels der einen oder der mehreren Stützen und/oder des oder der mehreren Hohlräume ausgebildet sein, um ein elektromagnetisches Feld im Formnest zu beeinflussen. Damit ist es möglich, ein solches Werkzeug nachträglich, also nach dessen Herstellung, zu trimmen bzw. zu justieren. Hierdurch kann das Werkzeug individuell eingestellt werden. Das Werkzeug kann somit einerseits an das von einer Vorrichtung zum Herstellen von Partikelschaumstoffteilen bereitgestellte elektrische Feld angepasst werden. Andererseits kann die Verteilung des elektrischen Feldes innerhalb des Formnestes individuell angepasst werden, d.h., dass in gewissen Bereichen das elektrische Feld gegenüber anderen Bereichen verstärkt wird, wenn benachbart zu diesen Bereichen ein Trimmkörper in den Hohlraum der Formhälfte eingesetzt wird. Hierdurch kann das elektrische Feld im Werkzeug an die Geometrie des Formnestes angepasst werden.

Weiterhin kann das elektrische Feld an das Material, aus dem die Schaumstoffpartikel ausgebildet sind, welche zu einem Partikelschaumstoffteil verschweißt werden sollen, angepasst werden. Unterschiedliche Materialien, aus welchen die Schaumstoffpartikel ausgebildet sind, wirken unterschiedlich auf ein angelegtes elektrisches Feld. Hierdurch kann es sein, dass das Werkzeug in einer bestimmten Einstellung mit einem ersten Material sehr gut funktioniert, jedoch mit einem zweiten Material nicht. Durch Austauschen bzw. Verändern der Anordnung von Trimmkörpern im Werkzeug kann dieses an das zweite Material angepasst werden.

Zusammenfassend kann festgehalten werden, dass das im Formnest anliegende elektrische Feld durch
- die Vorrichtung, welche das elektromagnetische Feld erzeugt, wie zum Beispiel der Signalgenerator und die Kondensatorplatten bei einem RF-Feld,
- durch die Form und das Material der Formhälften des Formwerkzeuges, als auch
- durch das zu verschweißende Material
beeinflusst wird.

Es besteht zwar grundsätzlich die Möglichkeit, das elektrische Feld in einem Formnest zu simulieren, wenn jedoch das Werkzeug in einer anderen Vorrichtung zur Erzeugung eines Partikelschaumstoffteils verwendet wird oder ein anderes Material damit verschweißt werden soll, dann passt die Simulation unter Umständen nicht mehr. Das erfindungsgemäße Werkzeug kann nachträglich getrimmt bzw. justiert werden, und kann dadurch auch an entsprechend veränderte Umstände (z.B. andere Vorrichtung zum Herstellen eines Partikelschaumstoffteils oder anderes zu verschweißendes Material) nachträglich angepasst werden.

Zur Trimmung ist es beispielsweise möglich, in die Formhälfte ein dielektrisches Material einzubringen. Dieses dielektrische Material wird beim Anlegen eines elektrischen Feldes polarisiert, so dass im dielektrischen Material ein dem elektrischen Feld entgegenwirkendes elektrisches Feld erzeugt wird. Hierdurch wird das elektrische Feld im Bereich des Formnestes konzentriert und erhöht, wodurch die Schweißwirkung zum Verschweißen von Schaumstoffpartikel zu einem Partikelschaumstoffteil erhöht wird.

Vorzugsweise weist zumindest die wenigstens eine Formhälfte zumindest eine in den Hohlraum mündende Öffnung auf, so dass ein Trimmkörper in den Hohlraum einsetzbar ist. Die das Formnest begrenzende Wandung ist selbstverständlich ohne Öffnung ausgebildet. Die Öffnung kann vorzugsweise zu der vom Formnest abgewandten Seite weisen, kann aber ebenso bevorzugt zur Seite weisen.

Der oder wenigstens einer der mehreren Hohlräume kann ein Form- oder Rastelement zum Positionieren und/oder Fixieren eines Trimmkörpers in den Hohlraum aufweisen.

Alternativ oder zusätzlich kann die Formhälfte wenigstens einen Anschluss für ein Trimmfluid aufweisen, der mit wenigstens einem des einen oder der mehreren Hohlräume verbunden ist. Damit kann ein Trimmfluid durch den wenigstens einen Hohlraum hindurch oder in den Hohlraum hinein oder aus dem Hohlraum heraus geleitet werden. Vorzugsweise sind die Hohlräume untereinander fluidkommunizierend verbunden, sodass die Hohlräume über eine einzige oder wenige, insbesondere zwei, Anschlüsse für Trimmfluid gemeinsam beschickt werden können. Andererseits können wenigstens Teilvolumina mehrerer Hohlräume voneinander fluiddicht abgetrennt sein, sodass die Hohlräume oder Teilvolumina davon individuell mit Trimmfluid beschickt werden können. Ein Teilvolumen kann beispielsweise durch einen in dem Hohlraum angeordneten Deckel abgegrenzt werden. Der Deckel kann innerhalb des Hohlraums höhenveränderlich gelagert sein und kann in einer Richtung vorgespannt und/oder höhenverstellbar sein.

Zusätzlich kann wenigstens ein Anschluss für Druckluft und/oder Vakuum vorgesehen sein, der mit wenigstens einem des einen oder der mehreren Hohlräume verbunden ist. Damit kann der wenigstens eine Hohlraum mit Druckluft oder Vakuum beaufschlagt werden, um beispielsweise das Trimmfluid aus dem wenigstens einen Hohlraum auszudrücken oder in den wenigstens einen Hohlraum einzusaugen. Vorzugsweise ist der wenigstens eine Anschluss für Druckluft und/oder Vakuum auf einer höheren Ebene angeordnet als der wenigstens eine Anschluss für ein Trimmfluid, sodass sich das Trimmfluid im unteren Bereich der Hohlräume sammeln kann und der Druckluft- oder Vakuumanschluss frei bleibt. Vorzugsweise sind die Hohlräume durch Verbindungsöffnungen in den Stützen verbunden, wobei die Verbindungsöffnungen oder eine Gruppe von Verbindungsöffnungen mit wenigstens einem von Anschlüssen für Temperiermedium, Trimmfluid, Druckluft oder Vakuum fluchten/fluchtet. Der/die Anschlüsse für Temperiermedium, Trimmfluid, Druckluft oder Vakuum kann/können in einer Seitenwandung, welche die Formhälfte seitlich abschließt und als Stütze wirkt, ausgebildet sein. Die Verbindungsöffnungen können in Stegen, die zwischen Seitenwandungen verlaufen und als Stütze wirken, ausgebildet sein.

Ein weiterer Aspekt der vorliegenden Erfindung betrifft ein Werkzeugsystem zum Herstellen von Partikelschaumstoffteilen, das ein oben erläutertes Werkzeug umfasst und zumindest einen Trimmkörper, der zum Einbringen in den oder wenigstens einen der Hohlräume ausgebildet ist, und/oder eine Trimmfluid-Bereitstellungseinrichtung, die zum Versorgen der wenigstens einen Formhälfte mit einem Trimmfluid ausgebildet ist, aufweisen.

Der Trimmkörper ist vorzugsweise aus einem Material mit einer relativen Permittivität (εr) von zumindest 2 ausgebildet. Je größer die relative Permittivität des Materials des Trimmkörpers ist, desto stärker ist seine Wirkung als Trimmkörper. Daher können auch Materialien mit einer relativen Permittivität von zumindest 3 oder von zumindest 4 zweckmäßig sein. Je kleiner die relative Permittivität des Materials des Trimmkörpers ist, desto genauer und feiner lassen sich die elektrischen Felder im Formnest einstellen. Daher können auch Materialien mit einer kleinen Permittivität, von zum Beispiel weniger als 2, sinnvoll sein.

Der Trimmkörper kann als Steckkörper ausgebildet sein, welcher beispielsweise mittels eines Rastelements oder mittels Reibschluss in der Formhälfte fixierbar ist. Der Trimmkörper kann somit einfach an der Formhälfte ausgetauscht werden, so dass die Formhälfte an unterschiedliche Produktionsbedingungen angepasst werden kann.

Der Trimmkörper kann so ausgebildet sein, dass er nur einen Teil des oder der Hohlräume ausfüllt. Insbesondere ist der Trimmkörper in dem jeweiligen Hohlraum so angeordnet, dass er sich vorzugsweise entfernt vom Formnest befindet. Hierdurch ist der Hohlraum benachbart zum Formnest nach wie vor frei und kann zum Durchleiten eines Temperiermediums genutzt werden.

Der Trimmkörper kann aus einem Festkörper ausgebildet sein. Insbesondere kann der Trimmkörper aus einem Kunststoffkörper ausgebildet sein. Der Trimmkörper kann jedoch auch durch Ausgießen eines oder mehrere der Hohlräume mittels eines Aushärtematerials hergestellt sein.

Das Werkzeugsystem kann auch mehrere Trimmkörper aufweisen, die in unterschiedlicher Größe und/oder aus unterschiedlichen Materialien, welche eine unterschiedliche relative Permittivität aufweisen, umfassen.

Das Werkzeugsystem kann auch eine Anschlussplatte aufweisen, die zwischen eine Kondensatorplatte und einer Formhälfte des Werkzeugs oder auf einer von einer Formhälfte des Werkzeugs abgewandten Seite einer Kondensatorplatte anzuordnen ist und die Medienanschlüsse und/oder Medienkanäle und/oder Medienöffnungen zur Zuführung und/oder Ableitung von Medien zu den Hohlräumen der Formhälfte von bzw. nach außen aufweist. Die Anschlussplatte kann Rohrstücke aufweisen, die bei bestimmungsgemäßer Montage der Anschlussplatte in die Hohlräumen der Formhälfte ragen. Mit der Anschlussplatte können Medien, insbesondere Trimmfluid, in die Hohlräume eingebracht werden. Je nach Ausgestaltung kann die Einbringung der Medien gemeinsam in alle Hohlräume oder individuell in einzelne oder Gruppen der Hohlräume erfolgen.

Nach einem weiteren Aspekt der vorliegenden Erfindung ist ein Verfahren zum Herstellen eines oder mehrerer Partikelschaumstoffteile durch Verschweißen von Schaumstoffpartikeln mittels elektromagnetischer Wellen vorgesehen, wobei ein Werkzeug mit ein Formnest bildenden Formhälften zwischen zwei Kondensatorplatten angeordnet wird, das Formnest mit Schaumstoffpartikeln gefüllt wird, das Werkzeug durch Annähern der beiden Formhälften geschlossen wird und das Werkzeug mit den Schaumstoffpartikeln in dem Formnest über die Kondensatorplatten eingebrachten elektromagnetischen Wellen, insbesondere Radio- oder Mikrowellen, ausgesetzt werden, wobei die Schaumstoffpartikel durch die elektromagnetischen Wellen sich erwärmen und wenigstens teilweise miteinander verschmelzen oder verbacken, wobei das Verfahren unter Verwendung des oben beschriebenen Werkzeugs oder Werkzeugsystems durchgeführt wird.

Dabei können ein oder mehrere Trimmkörper oder ein Trimmfluid in dem oder wenigstens einem der Hohlräume angeordnet werden, um ein elektromagnetisches Feld im Formnest zu beeinflussen.

Es kann auch vorgesehen sein, dass in Abhängigkeit von der Qualität der Verschweißung der Schaumstoffpartikel die Anordnung eines oder mehrerer Trimmkörper oder des Trimmfluids im Werkzeug verändert wird, um die Beeinflussung des elektromagnetischen Felds im Formnest zu justieren.

Ferner kann vorgesehen sein, dass die Anordnung eines oder mehrerer Trimmkörper oder des Trimmfluids im Werkzeug während eines Schäumvorgangs verändert wird, um ein elektromagnetisches Feld im Formnest dynamisch zu beeinflussen. Dadurch kann insbesondere auf eine veränderliche Permittivität des Formlings während des Schäumvorgangs reagiert werden.

Wird zum Beispiel festgestellt, dass ein Partikelschaumstoffteil in einem bestimmten Bereich nur unvollständig verschweißt ist, dann kann benachbart zu diesem Bereich ein Trimmkörper eingesetzt werden, wodurch das elektrische Feld im Formnest, in dem dieser Bereich hergestellt wird, erhöht wird. Ist hingegen das Partikelschaumstoffteil an einer Stelle zu stark aufgeschmolzen, dann können an der Trimmwandformhälfte an den anderen Bereichen, die zu dieser Stelle nicht benachbart sind, Trimmkörper eingesetzt und die Heizleistung insgesamt herabgesetzt werden, indem das elektrische Feld entweder nur für eine kürzere Zeitspanne angelegt wird und/oder die elektrische Feldstärke (bzw. die elektrische Spannung bei einem mittels Kondensatorplatten angelegten RF-Feld) herabgesetzt wird.

In Verbindung mit der Einstellung der gesamten elektrischen Leistung bzw. Wärmeleistung können mit diesem Verfahren sowohl Bereiche mit zu starker Erhitzung als auch Bereiche mit zu geringer Erhitzung korrigiert werden.

Beim Trimmen können die Trimmkörper auch spanend bearbeitet werden, um deren Form zur Anpassung des elektrischen Feldes zu verändern.

Grundsätzlich ist es auch möglich, durch geteilte und in den einzelnen Teilen höhenverstellbare Kondensatorplatten lokal angepasste Felder zu erzeugen. Durch die vorliegende Erfindung ist es möglich, in einem Formnest eines Werkzeugs zur Herstellung eines Partikelschaumteils eine lokale Anpassung des elektromagnetischen Feldes auch für ebenflächige Kondensatorplatten vorzunehmen, was in Fertigung und Handhabung erheblich einfacher ist.

Zusammenfassend ist in dem oben beschriebenen Werkzeug die formgebende Werkzeughälfte so ausgelegt, dass die resultierende relative Permittivität des Werkzeugs gut mit der relativen Permittivität des Partikelschaums übereinstimmt. Dies wird dadurch erreicht, dass die Werkzeughälfte freie Flächen bzw. Volumina (einen oder mehrere Hohlräume) jenseits der Begrenzungswandung und Stützen wie etwa Wände oder Stege, ggf. auch Rippen, Pfosten, Waben, Zickzack-Labyrinthe etc. aufweist. Die Relation eines Volumens von stützendem Material und Luft bestimmt die gewünschte relative Permittivität und kann beispielsweise wenigstens 0,05 oder 0,1 und/oder bis zu 0,3 oder 0,5 oder 0,7 oder 0,9 betragen. Falls das elektromagnetische Feld lokal verstärkt werden soll, um das Werkzeug nachträglich zu optimieren, können Trimmkörper in die Hohlräume eingebracht werden. Wenn die Stützen als Labyrinth ausgebildet sind, können sie bereits dadurch und ohne weiteren Aufwand als Kühl- oder Heizkanal verwendet werden. Dadurch ist auch eine Vario-Temperierung mit Luft oder CO2 oder einem anderen Temperiermedium möglich. Das erfindungsgemäße Werkzeug ermöglicht die Auslegung ohne Simulation, und Design-Rules sind einfach definiert.

Die Erfindung wird beispielhaft anhand der Zeichnungen näher erläutert. Die Zeichnungen zeigen in:
- Figur 1: ein Ausführungsbeispiel eines Werkzeuges mit zwei Formhälften in Schnittansicht in einer geschlossenen Stellung,
- Figur 2A: eine entlang einer durch eine Linie II-II in Fig. 1 angedeutete Ebene geschnittene Ansicht von oben einer oberen Formhälfte von Fig. 1;
- Figuren 2B - 2E: je eine Ansicht gemäß Fig. 2A von Abwandlungen einer Formhälfte;
- Figur 3: ein Ausführungsbeispiel eines Werkzeugsystems mit dem Werkzeug von Fig. 1 und Trimmkörpern;
- Figuren 4A und 4B: Ausführungsvarianten einer Formhälfte mit Trimmkörpern in einer vergrößerten Darstellung einer Einzelheit IV in Fig. 3;
- Figur 5: ein anderes Ausführungsbeispiel eines Werkzeugsystems mit dem Werkzeug von Fig. 1 und anderen Trimmkörpern;
- Figur 6: ein weiteres Ausführungsbeispiel eines Werkzeuges mit zwei Formhälften in einer Ansicht gemäß Fig. 1;
- Figur 7: ein Ausführungsbeispiel einer Vorrichtung zum Herstellen von Partikelschaumkörpern mit einem Werkzeug bzw. Werkzeugsystem einer der vorherigen Darstellungen in einer schematischen Seitenansicht;
- Figur 8: ein Ersatzbild eines Werkzeugs mit zwei Formhälften, das vergleichenden Simulationen zur Ermittlung eines Feldverlaufs im Werkzeug zugrunde lag;
- Figur 9: ein Ausführungsbeispiel eines Werkzeugs mit zwei Formhälften, das einer Simulation zur Ermittlung eines Feldstärkenverlaufs im Werkzeug zugrunde lag;
- Figur 10: einen Feldstärkenverlauf bei einer Simulation mit dem Werkzeug von Fig. 8 ohne Trimmkörper;
- Figur 11: einen Feldstärkenverlauf bei einer Simulation mit dem Werkzeug gemäß Fig. 12 mit Trimmkörpern;
- Figur 12: ein weiteres Ausführungsbeispiel eines Werkzeuges mit zwei Formhälften in Schnittansicht in einer geschlossenen Stellung;
- Figur 13: eine Formhälfte eines Werkzeugs nach einem weiteren Ausführungsbeispiel der Erfindung;
- Figur 14: eine Formhälfte eines Werkzeugs nach einem noch weiteren Ausführungsbeispiel der Erfindung;
- Figur 15: eine Anschlussplatte zur Verwendung an einem Werkzeug nach einem noch weiteren Ausführungsbeispiel der Erfindung;
- Figur 16: eine Formhälfte eines Werkzeugs nach einem noch weiteren Ausführungsbeispiel der Erfindung;
- Figur 17: eine Formhälfte eines Werkzeugs nach einem noch weiteren Ausführungsbeispiel der Erfindung;
- Figur 18A: eine Formhälfte eines Werkzeugs mit Trimmkörper nach einem noch weiteren Ausführungsbeispiel der Erfindung im Querschnitt;
- Figur 18B: die Formhälfte mit Trimmkörper von Fig. 18A in Draufsicht;
- Figur 18C: die Formhälfte mit Trimmkörper von Fig. 18A in einer Ausführungsvariante.

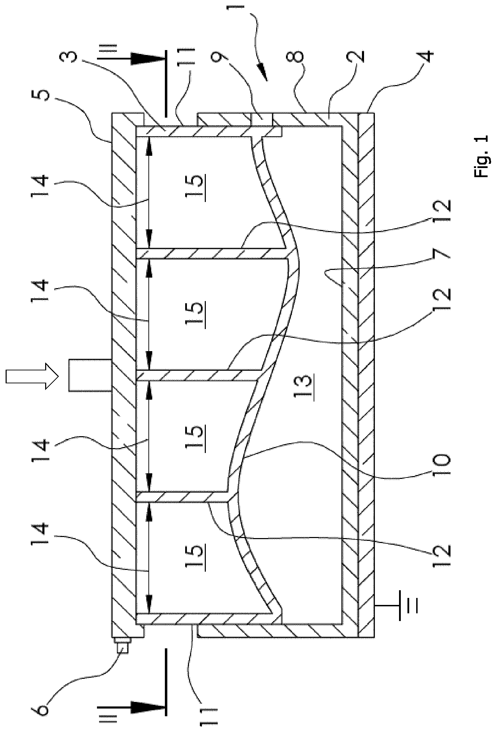

Ein erstes Ausführungsbeispiel eines erfindungsgemäßen Werkzeugs 1 zum Herstellen eines Partikelschaumstoffteils weist zwei Formhälften 2, 3 auf (Fig. 1). Eine erste (in der Figur untere) Formhälfte 2 ist aus einer Bodenwandung 7 und einer umlaufenden Seitenwandung 8 ausgebildet. An der Außenseite der Bodenwandung 7 ist eine erste Kondensatorplatte 4 angeordnet. Die andere, nämlich eine zweite (in der Figur obere) Formhälfte 3 ist mit einer Begrenzungswandung 10 und einer umlaufenden Seitenwandung 11 und ist als eine Art Stempel ausgebildet, welcher mit geringem Spiel in den durch die umlaufende Seitenwandung 8 begrenzten Bereich eingeführt werden kann, sodass zwischen den beiden Formhälften 2, 3 ein Formnest 13 begrenzt ist, wobei die Seitenwandung 11 der zweiten Formhälfte 3 von dem Formnest 13 weg weist. Die zweite Formhälfte 3 wird somit als Stempel-Formhälfte 3 und die erste Formhälfte 2 als Matrizen-Formhälfte 2 bezeichnet. Auf der gleichen Seite wie die Seitenwandung 11 ragen mehrere Stege 12 von der Begrenzungswandung 10 ab. Die Stege 12 sind an die Seitenwandung 11 angeschlossen und enden auf einer Ebene, auf der eine zweite Kondensatorplatte 5 aufliegt. Die Stege 12 und die Seitenwandung 11 der Stempel-Formhälfte 3 sind somit Stützen im Sinne der Erfindung, welche zum Abstützen der Begrenzungswandung 10 an der zweiten Kondensatorplatte 5 dienen. Die zweite Kondensatorplatte 5weist einen Wellenleiteranschluss 6 zum Anschluss eines Wellenleiters auf. Die Seitenwandungen 11 und Stege 12 der Stempel-Formhälfte 3 bilden miteinander und mit der Begrenzungswandung 10 jeweils Hohlräumen 15 aus, die an der Oberseite jeweils eine Öffnung 14 aufweisen. Es ist somit festzustellen, dass die Hohlräume 15 von dem Formnest 13 weg weisen. Die zweite Kondensatorplatte 5 ist mit einer Kolbenstange einer Presse verbunden oder verbindbar, um die Stempel-Formhälfte 3 bezüglich der Matrizen-Formhälfte 2 zu bewegen und insbesondere die Stempel-Formhälfte 3 in die Matrizen-Formhälfte 2 einzuführen (Richtung eines umrandeten Pfeils in Fig. 1).

An der Seitenwandung 8 der Matrizen-Formhälfte 2 ist eine Einfüllöffnung 9 zum Zuführen von Schaumstoffpartikeln in das Formnest 13 ausgebildet (Fig. 1). Weiterhin kann noch eine Entlüftungsöffnung (nicht dargestellt) an der Seitenwandung 8 vorgesehen sein, aus welcher beim Befüllen des Formnests 13 die Luft entweichen kann.

Das Werkzeug 1 ist vorgesehen, um Partikelschaumstoffteile durch Verschweißen von in das Formnest 13 eingebrachten Schaumstoffpartikeln mittels elektromagnetischer Wellen herzustellen. Zu diesem Zweck ist die erste Kondensatorplatte 4mit Masse bzw. Erde verbindbar und ist die zweite Kondensatorplatte 5 über den Wellenleiteranschluss 6 mit einem Wellengenerator verbindbar. Bei Anschluss eines Wellengenerators wie etwa eines RF- oder Mikrowellengenerators wird im Formnest 13 ein hochfrequentes elektromagnetisches Feld erzeugt. Durch die Energie des elektromagnetischen Feldes werden die Schaumstoffpartikel an- oder aufgeschmolzen und miteinander verschweißt.

Die Stärke des in dem Formnest 13 vorherrschenden elektromagnetischen Feldes hängt von den Eigenschaften der zwischen den Kondensatorplatten 4, 5 vorhandenen Stoffe ab, insbesondere von deren relativer Permittivität εr . Die relative Permittivität εr ist als das Verhältnis der Permittivität eines Materials oder Mediums zur Permittivität des Vakuums, der elektrischen Feldkonstante ε0, definiert. Die relative Permittivität εr ist materialabhängig und kann als ein Maß für die feldschwächenden Effekte einer dielektrischen Polarisation des Materials verstanden werden. Je größer die relative Permittivität εr eines Materials, umso größer die Feldschwächung.

Für Luft liegt beispielsweise die relative Permittivität εr nahe an der elektrischen Feldkonstante ε0, genau bei εr= 1,00059. Als weitere Beispiele liegt die relative Permittivität
- für Teflon bei εr=2
- für Paraffin bei εr=2,2
- für darrtrockenes Holz bei εr=2..3,5
- für PE und PET bei εr=3,5
- für PEEK bei εr=4
- für ABS bei εr=4,3
- für Porzellan bei εr=2..6
- für Glas bei εr=6..8
- für Tantalpentoxid bei εr=27
- für Bariumtitanat bei εr=15.000 (nach Helmut Benkert, Einführung in die Technische Keramik, http://www.keramverband.de/keramik/pdf/02/sem02_03.pdf)
(jeweils in etwa, bei 18°C und 50 Hz, nach https://de.wikipedia.org/wiki/Permittivität, soweit nicht anders angegeben). Die vorstehenden Beispiele sind nur als Überblick gedacht und schränken die mögliche Auswahl an Werkstoffen für in dieser Anmeldung genannte Elemente wie etwa die Formhälften 2, 3 oder die später beschriebenen Trimmkörper 30, 50 in keiner Weise ein.

Die Formhälften 2, 3 sind für elektromagnetische Wellen, insbesondere solche mit einer Wellenlänge der durch den Wellengenerator erzeugten Wellen, transparent (d.h., grundsätzlich durchlässig). D.h., wenigstens die Bodenwandung 7 der Matrizen-Formhälfte 2 und die Begrenzungswandung 10 der Stempel-Formhälfte 3 sind aus einem Dielektrikum, welches beispielsweise Kunststoff, Holz, Keramik, Glas oder dergleichen aufweist, hergestellt. Die in das Formnest 13 eingebrachten Schaumpartikel weisen ebenfalls dielektrische Eigenschaften auf. Nicht nur bei unregelmäßiger Geometrie des Formnests 13, sondern auch bei lokal unterschiedlichen Werkstoffen der Schaumstoffpartikel sowie Einflüssen durch die Formhälften 2, 3 selbst kommt es dazu, dass im Formnest 13 bzw. im zu bildenden Partikelschaumteil lokal unterschiedliche Feldstärken des elektromagnetischen Feldes vorherrschen können und/oder die Energie des elektromagnetischen Feldes durch die Schaumpartikel im Formnest 13 lokal unterschiedlich stark absorbiert wird. Solche unregelmäßigen Feldstärken und/oder Absorptionsgrade können erwünscht sein, beispielsweise weil auch das Schmelzvermögen unterschiedlicher Schaummaterialen verschieden sein kann, sie können aber auch unerwünscht sein. Dies kann zu unzureichender oder übermäßiger Erwärmung und damit zu unerwünschten Verschmelzungsergebnissen der Schaumpartikel führen. Um diesem Problem abzuhelfen, sind die Hohlräume 15 der Stempel-Formhälfte 3 vorgesehen, die die Masse des Materials in der Stempel-Formhälfte 3 beträchtlich reduzieren. Dies wiederum führt zu einer vorteilhaften Reduzierung des Einflusses auf die elektromagnetische Feldstärke im Formnest 13, was die Flexibilität im Einsatz und in der Formgebung des Formnests 13 wie auch der Stempel-Formhälfte 3 beträchtlich verbessert. Dieser und andere Vorteile sind bereits eingangs dieser Anmeldung beschrieben worden, sodass an dieser Stelle nur darauf verwiesen wird.

Ferner können die Hohlräume 15 dem Trimmen der Stempel-Formhälfte 3 dienen, um das elektromagnetische Feld im Formnest 13 zu beeinflussen. Durch geeignetes Trimmen kann das elektromagnetische Feld im Formnest 13 so beeinflusst werden, dass im Formnest 13 eine gleichmäßige oder sonstwie wünschenswerte Verteilung der Feldstärke vorherrscht. Beispielsweise kann es wünschenswert sein, bei lokal unterschiedlichen Partikelwerkstoffen mit unterschiedlichen relativen Permittivitäten, bei lokal unterschiedlichen Materialstärken und lokal unterschiedlichen Materialdichten lokal unterschiedliche Feldstärken zu haben. Beispielsweise hat sich gezeigt, dass an Stellen einer geringen Materialstärke (d.h., einer geringen Höhe des Formnests 13) aufgrund des Zufahrens des Werkzeugs sich höhere Materialdichten einstellen. Da verdichtete Schaumpartikel die Energie des angelegten elektromagnetischen Feldes stärker absorbieren, kann es an solchen Stellen zu einer intensiverer Erwärmung als an benachbarten Stellen kommen. Daher kann beobachtet werden, dass an den Stellen höherer Verdichtung die Schaumpartikel zu stark aufgeschmolzen oder gar verbrannt bzw. verkohlt werden und/oder an den benachbarten Stellen die Verschweißung der Schaumpartikel nicht ausreichend ist. Daher kann es wünschenswert sein, die Feldstärke an den Stellen höherer Verdichtung der Schaumpartikel geringer zu haben als an den benachbarten Stellen. Ähnliches gilt bei Materialmixen mit Abschnitten stärker absorbierender Schaumpartikel und Abschnitten weniger stark absorbierender Schaumpartikel. Auch kann es vorkommen, dass das Werkzeug 1 und die Schaumauswahl vorab anhand von Modellen oder Versuchen aufeinander abgestimmt wurden, aber später in der Serienfertigung Abweichungen im Verschmelzungsverhalten auftreten, beispielsweise durch Verwendung einer veränderten Rezeptur oder auch nur einer anderen Charge an Schaumpartikeln. In allen diesen Fällen kann es wünschenswert sein, das elektromagnetische Feld im Formnest 13 zu beeinflussen.

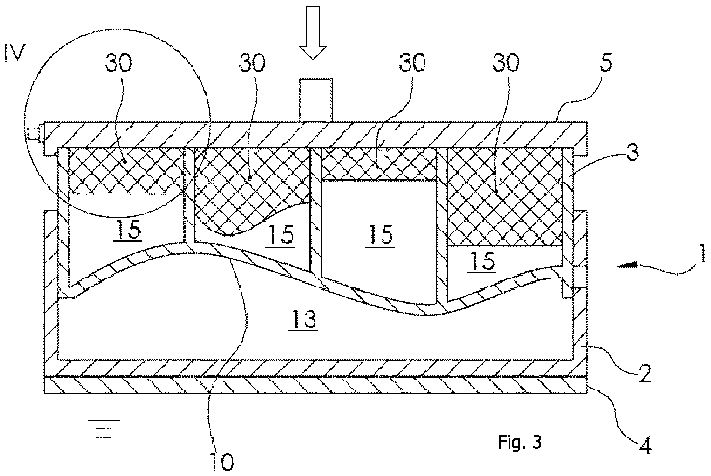

Zu diesem Zweck können beispielsweise durch die Öffnungen 14 Trimmkörper 30 in die Hohlräume 15 eingesetzt werden (Fig. 3). Die Trimmkörper 30 sind aus einem dielektrischen Material hergestellt. Aufgrund der polarisierenden Eigenschaften eines Dielektrikums wird das elektromagnetische Wechselfeld durch das im Weg der Feldlinien liegende Dielektrikum abgeschwächt. In Bereichen auf dem Weg derselben Feldlinien, die von dem Dielektrikum frei gehalten werden, wird dagegen das Feld nicht geschwächt bzw. sogar verstärkt. Durch Trimmkörper 30 unterschiedlicher Größe, Form und Permittivität kann somit das elektrische Feld auf unterschiedliche Weise beeinflusst werden.

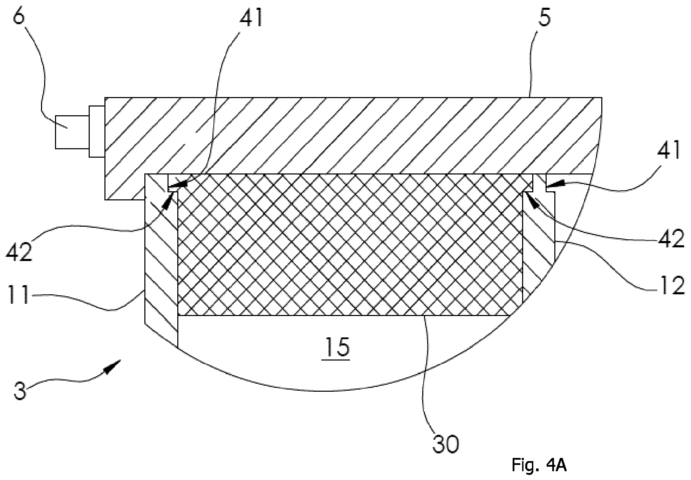

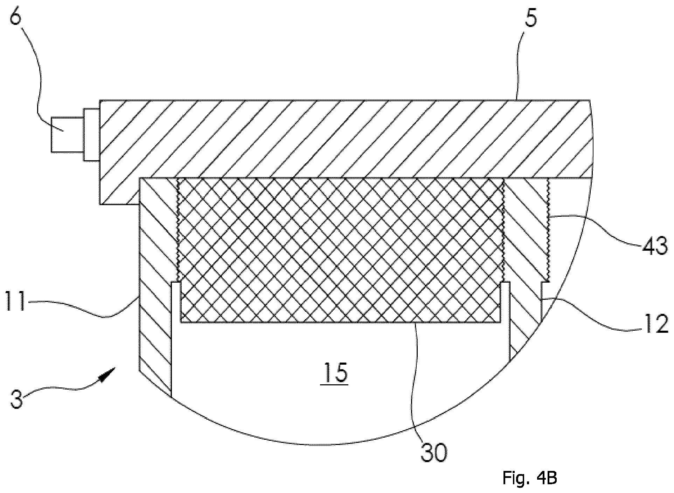

Um die Lage der Trimmkörper 30 in den Hohlräumen 15 zu fixieren, können die Seitenwandungen 3 und Stege 12 der Stempel-Formhälfte 3 im Bereich der Öffnungen 14 Absätze 41 aufweisen und können die Trimmkörper 30 an der Oberseite Kränze 42 oder ähnliche Formmerkmale aufweisen, die sich bei Einführen der Trimmkörper 30 an den Absätzen 41 abstützen (Fig. 4A). Alternativ können die Seitenwandungen 3 und Stege 12 der Stempel-Formhälfte 3 im Bereich der Öffnungen 14 oder durchgehend oder in anderen Bereichen Rastelemente 43 aufweisen und können die Trimmkörper 30 an der Seite korrespondierende Formmerkmale aufweisen, die bei Einführen der Trimmkörper 30 an den Rastelementen 43 einrasten (Fig. 4B). Alternativ können die Trimmkörper 30 so ausgelegt sein, dass sie durch bloße Reibung in den Hohlräumen 15 halten.

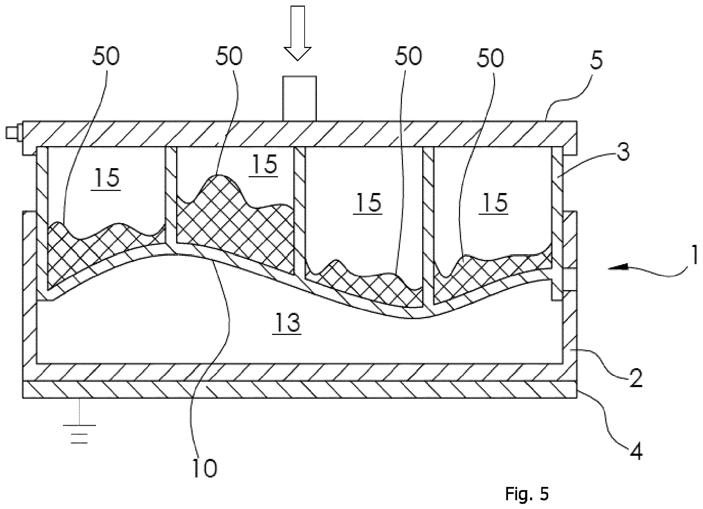

Anstelle von als Steckkörper vorgeformten Trimmkörpern 30 wie zuvor beschrieben können auch Trimmkörper 50 durch Einbringen eines formbaren dielektrischen Materials in die Hohlräume 15 ausgebildet werden (Fig. 5). In diesem Fall sind die Trimmkörper 50 besonders leicht an der Innenseite der Begrenzungswandung 10 anbringbar. Das dielektrische Material der Trimmkörper 50 kann nach dem Einbringen aushärtbar sein oder hochzäh und vorzugsweise an dem Material der zweiten Formhälfte 3 anhaftend sein.

Die Trimmkörper 30, 50 sind vorzugsweise aus einem Material mit einer relativen Permittivität (εr) von zumindest 2 ausgebildet. Je größer die relative Permittivität εr des Materials der Trimmkörper 30, 50 ist, desto stärker ist ihre Wirkung zur Trimmung der Formhälfte 3, um ein elektromagnetisches Feld im Formnest 13 zu beeinflussen. Daher können auch Materialien mit einer relativen Permittivität εr von zumindest 3 oder von zumindest 4 zweckmäßig sein. Je kleiner die relative Permittivität εr des Materials des Trimmkörpers ist, desto genauer und feiner lassen sich die elektrischen Felder im Formnest einstellen. Daher können auch Materialien mit einer kleinen relativer Permittivität εr, von zum Beispiel weniger als 2, sinnvoll sein.

Selbstverständlich ist es je nach Erfordernis denkbar, dass nicht alle Hohlräume 15 mit einem Trimmkörper 30, 50 gefüllt sind. Ferner ist es denkbar, dass die zweiten Formhälfte 3 in Abhängigkeit von Vorversuchen oder Simulationen mit Primär-Trimmkörpern 30, 50 präpariert wird und später anhand tatsächlicher, ggf. veränderlicher Gegebenheiten in der Serienfertigung, die sich im Schäumergebnis zeigen, mit Sekundär-Trimmkörpern 30, 50 feingetrimmt wird. Dabei können die Primär-Trimmkörper als Trimmkörper 50 aus einer formbaren Masse (Fig. 5) ausgestaltet sein, während die Sekundär-Trimmkörper als Trimmkörper 30 fester Geometrie (Fig. 3) ausgestaltet sind, oder umgekehrt oder jeweils eines von beiden. Es ist auch denkbar, dass ein Primär-Trimmkörper 30 fester Geometrie einen weiteren Hohlraum aufweist, in den ein Sekundär-Trimmkörper 30, 50 fester Geometrie oder aus formbarer Masse einbringbar ist.

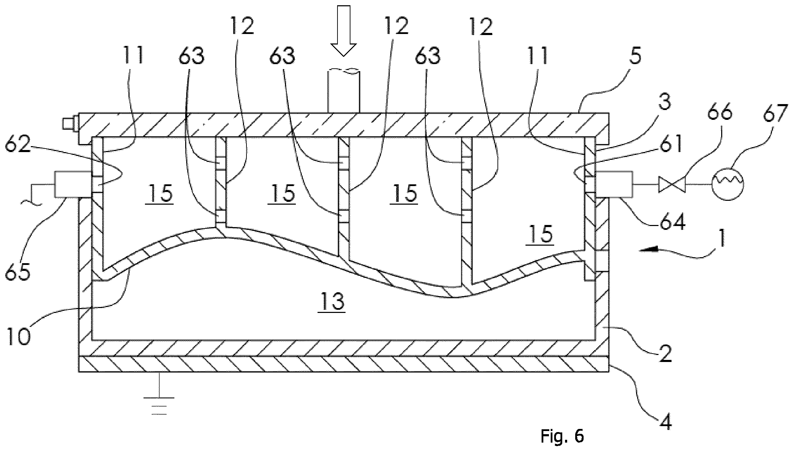

In den beschriebenen und gezeigten Ausführungsbeispielen sind die Hohlräume 15 nur zum Teil mit einem Trimmkörper 30, 50 gefüllt. Dadurch ist es möglich, dass der verbleibende Raum zur Temperierung mit einem Temperiermedium nutzbar ist. In einem weiteren Ausführungsbeispiel kann die Seitenwandung 11 der Stempel-Formhälfte 3 eine Fluidzuflussöffnung 61 und eine Fluidabflussöffnung 62 aufweisen und können die Stege 12 Fluiddurchströmungsöffnungen 63 aufweisen (Fig. 6). An der Fluidzuflussöffnung 61 ist ein Fluidvorlaufanschluss 64 vorgesehen, der über ein Ventil 66 mit einer Fluidquelle 67 verbunden ist. An der Fluidabflussöffnung 62 ist ein Fluidrücklaufanschluss 65 vorgesehen, der - je nach verwendetem Fluid und je nach Prozessführung - ins Freie, die Umgebung oder, ggf. über eine Aufbereitungsvorrichtung, zurück zu der Fluidquelle 67 führt. Somit kann ein Temperierfluid durch die Hohlräume 15 der Stempel-Formhälfte 3 geleitet werden, um beispielsweise das Werkzeug 1 vorzuwärmen, das Formnest 13 bzw. einen darin befindlichen Partikelschaumkörper zu kühlen, oder ganz allgemein eine gewünschte Temperaturführung zu verwirklichen.

Die Fluiddurchströmungsöffnungen 63 können je nach Art und Anordnung der verwendeten Trimmkörper 30, 50 (vgl. Fign. 3, 5) im oberen Bereich der Hohlräume 15 oder im unteren Bereich der Hohlräume 15 angeordnet sein, sodass eine Durchströmung durch das Temperierfluid nicht durch die Trimmkörper 30, 50 behindert wird. Wenn die Fluiddurchströmungsöffnungen 63 wie im dargestellten Ausführungsbeispiel sowohl im oberen Bereich als auch im unteren Bereich der Hohlräume 15 angeordnet sind, können verschiedenartige Trimmkörper 30, 50 alternativ verwendet werden. Die Fluidzufluss- und -abflussöffnungen 61, 62 sind vorzugsweise auf der Höhe der Fluiddurchströmungsöffnungen 63 oder, wenn die Fluiddurchströmungsöffnungen 63 sowohl im oberen Bereich als auch im unteren Bereich der Hohlräume 15 angeordnet sind, auf einer Höhe, die zwischen den Höhen der Fluiddurchströmungsöffnungen 63 liegt. Sofern ein Trimmkörper 30 fester Geometrie so groß ist, dass er in den Bereich der Fluiddurchflussöffnungen 63 ragt, können Querbohrungen in einem solchen Trimmkörper 30 auf der Höhe der Fluiddurchflussöffnungen 63 vorgesehen sein. Falls es möglich sein soll, einen Trimmkörper 50 aus einer formbaren Masse über die Höhe der Fluiddurchflussöffnungen 63 hinaus in die Hohlräume zu füllen, kann es vorteilhaft sein, wenn die Fluidzufluss- und -abflussöffnungen 61, 62 und die Fluiddurchströmungsöffnungen 63 durch Röhrchen oder dergleichen verbunden sind. Auch wenn die Fluidzufluss- und -abflussöffnungen 61, 62 im dargestellten Ausführungsbeispiel auf gegenüberliegenden Seiten der Stempel-Formhälfte 3 vorgesehen sind, können sie je nach Fluidführung im Inneren der Stempel-Formhälfte 3 auch auf der gleichen Seite oder auf aneinandergrenzenden Seiten angeordnet sein. Um zu vermeiden, dass Temperierfluid aus der Öffnung 14 der Hohlräume 15 austritt, kann an der Anlagefläche der zweiten Kondensatorplatte 5 eine Dichtung vorgesehen sein, wobei die Dichtung als Randdichtung auf der Seite der zweiten Formhälfte 3 oder als Flächendichtung auf der Seite der zweiten Kondensatorplatte 5 ausgestaltet sein kann. Gegebenenfalls kann auch die Materialpaarung zwischen der zweiten Formhälfte 3 und der zweiten Kondensatorplatte 5 im Betrieb (d.h. unter Druck) eine ausreichende Dichtwirkung aufweisen.

Vorzugsweise sind die Formhälften 2, 3 jeweils aus einem einzigen Formteil hergestellt. Alternativ kann die Seitenwandung 8 der ersten Formhälfte 2 an die Bodenwandung 7 angesetzt sein. Als weitere Alternative kann die Bodenwandung 7 der ersten Formhälfte 2 weggelassen werden, wenn eine ausreichende Abdichtung zwischen der Seitenwandung 8 und der ersten Kondensatorplatte 4 im Betrieb (d.h. unter Druck) sichergestellt ist. Dies kann durch eine eigens vorgesehene Dichtung oder durch die Materialpaarung zwischen der ersten Formhälfte 2 und der ersten Kondensatorplatte 4 bewerkstelligt werden.

Gemäß dem vorstehend beschriebenen Ausführungsbeispiel sind die Kondensatorplatten 4, 5 kein Bestandteil des Werkzeugs 1. In einer Ausführungsvariante kann eine oder können beide der Kondensatorplatten 4, 5 Teil des Werkzeugs 1 sein. Beispielsweise kann die Bodenwandung 7 der Matrizen-Formhälfte 2 die erste Kondensatorplatte 4 aufweisen oder kann die erste Kondensatorplatte 4 die Bodenwandung 7 der Matrizen-Formhälfte 2 bilden. Beispielsweise kann die erste Kondensatorplatte 4 an die Seitenwandung 8 der Matrizen-Formhälfte 2 angesetzt (etwa geschraubt, geklebt, angegossen, etc.) sein oder in die Bodenwandung 7 der Matrizen-Formhälfte 2 integriert (etwa eingegossen, in eine Tasche eingesetzt, etc.) sein.

Auch wenn die in die Hohlräume 15 mündenden Öffnungen 14 in den gezeigten Ausführungsbeispielen am oberen Rand der Stempel-Formhälfte 3 vorgesehen sind, ist die Erfindung nicht hierauf beschränkt. Vielmehr können in Ausführungsvarianten die Öffnungen 14 auch in einer Seitenwandung 11 der Stempel-Formhälfte 3 vorgesehen sein, während die Oberseite der Stempel-Formhälfte 3 geschlossen ausgebildet ist. Um von einer Seite in weiter innen liegende Bereiche der Stempel-Formhälfte 3 zu gelangen, können auch Öffnungen 14 in den Stegen 12 vorgesehen sein. Bei einer solchen Ausführungsvariante kann die zweite Kondensatorplatte 5 mit der Stempel-Formhälfte 3 verbunden sein oder mit dieser ein Bauteil bilden. Beispielsweise kann die zweite Kondensatorplatte 5 an die Seitenwandung 11 der Stempel-Formhälfte 3 angesetzt (etwa geschraubt, geklebt, angegossen, etc.) sein oder in eine Deckelwandung (sofern vorhanden) der Stempel-Formhälfte 3 integriert (etwa eingegossen, in eine Tasche eingesetzt, etc.) sein.

In weiteren Ausführungsvarianten ist es auch denkbar, dass die Seitenwandungen 8, 11 der Formhälften 2, 3 aus einem elektrisch leitenden Material ausgebildet sind, und dass sie mit den Kondensatorplatten 4, 5 leitend verbunden oder einstückig ausgebildet sind. Falls die Seitenwandungen 8, 11 beider Formhälften 2, 3 elektrisch leitend ausgebildet sind, sind sie jedoch zumindest in den Bereichen, in welchen sie sich berühren, mit einer elektrisch isolierenden Schicht, insbesondere Kunststoffschicht, beschichtet. Vorzugsweise ist bei einer solchen Ausführungsvariante die umlaufende Seitenwandung 8 nicht elektrisch leitend, z.B. aus Kunststoff ausgebildet, sodass am Randbereich keine sehr kleinen Abstände zwischen den Kondensatorplatten entstehen, welche zu lokal sehr starken elektrischen Feldern führen würden.

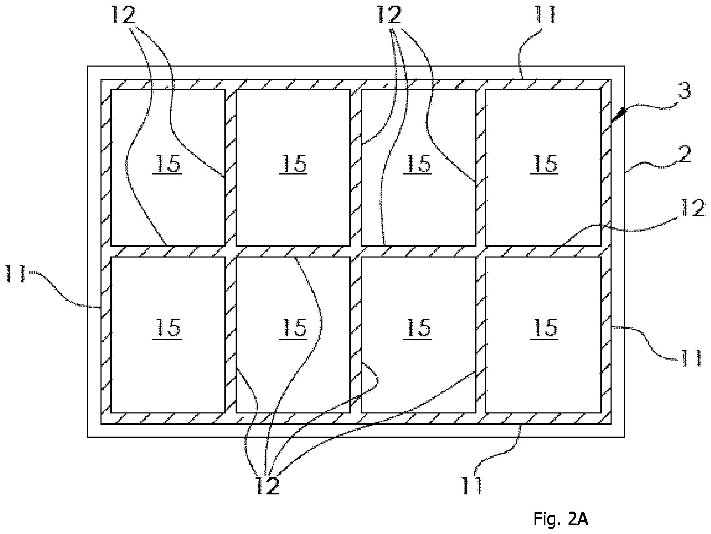

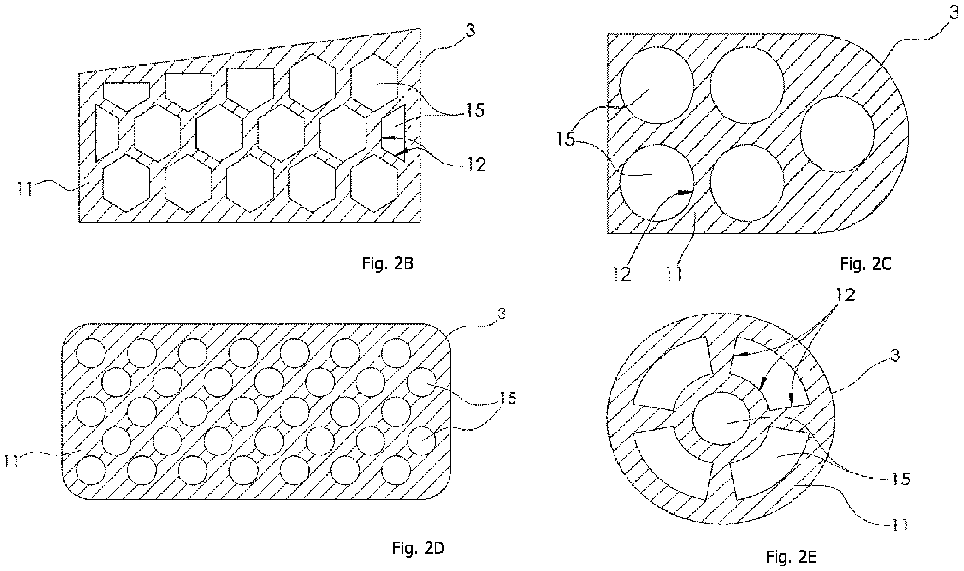

Es ist festzuhalten, dass die Darstellung der Geometrie der Formhälften 2, 3, des Formnests 13 und der Hohlräume 15 rein beispielhaft ist und völlig von der Art und Form eines herzustellenden Partikelschaumkörpers abhängig ist. Wenn das Formnest 13 und damit die Stempel-Formhälfte 3 in der Draufsicht beispielsweise rechteckig ist, können die Hohlräume 15 ebenfalls rechteckig oder quadratisch sein und in der Art einer Matrix von beispielsweise zwei Reihen á vier Hohlräumen 15 angeordnet sein (Fig. 2A). Je nach Bedarf können die Hohlräume 15 mehr oder weniger dicht sein und können die Hohlräume 15 auch unterschiedliche Querschnittsformen und Größen aufweisen. Beispielsweise können die Hohlräume im Querschnitt auch hexagonal (Fig. 2B) oder kreisförmig (Fig. 2C oder dichter gepackt Fig. 2D) oder auch anders geformt sein. Wenn das Formnest 13 und damit die Stempel-Formhälfte 3 in der Draufsicht beispielsweise kreisförmig oder oval ist, können die Hohlräume 15 beispielsweise kuchenstückartig (Fig. 2E), oder ringsegmentartig einen kreisförmigen Hohlraum 15 umgebend (Fig. 2F) angeordnet sein. Die in den Figuren gezeigten Querschnittsformen der Formhälfte 3 sind völlig beispielhaft. Die Formhälfte 3 kann mit den Hohlräumen 15 einstückig und in einem Arbeitsgang hergestellt sein, beispielsweise durch ein Gussverfahren. Alternativ können die Hohlräume 15 auch nachträglich in die Formhälfte 3 eingearbeitet sein, beispielsweise durch Bohren aus einem vollen Block. Ferner ist es auch möglich, die Formhälften 2, 3 durch ein additives Herstellungsverfahren wie etwa dreidimensionalen Druck auszubilden, wodurch auch komplexe Formen sehr variabel und ohne oder mit einem Minimum an Nachbearbeitung verwirklicht werden können.

Auch wenn in den gezeigten Ausführungsbeispielen die Hohlräume 15 in der Stempel-Formhälfte 3 vorgesehen sind, kann auch die Matrizen-Formhälfte (erste Formhälfte) 2 in entsprechender Weise mit Hohlräumen ausgebildet sein, zusätzlich oder alternativ zur Stempel-Formhälfte 3.

Ferner ist in einigen gezeigten Ausführungsbeispielen die obere Kondensatorplatte 5 mit einem umlaufenden Randsteg versehen, der die Seitenwandung 11 der Stempel-Formhälfte 3 umgibt. Dieser Randsteg kann der Zentrierung und Stabilisierung der Seitenwandung 11 dienen, ist aber völlig optional und kann auch weggelassen werden.

Auch wenn die Seitenwandungen 8, 11 jeweils als eine einzige, umlaufende Seitenwandung beschrieben sind, können einzelne in Umfangsrichtung aneinandergrenzende Abschnitte der Seitenwandungen 8, 11 auch jeweils als Seitenwandung angesprochen werden.

Das Werkzeug 1 kann als Crackspalt-Werkzeug ausgebildet sein und als solches im Betrieb in grundsätzlich in drei unterschiedlichen Stellungen eingesetzt, eine offene Stellung (nicht dargestellt), in welcher die beiden Formhälften 2, 3 vollständig voneinander getrennt sind, sodass ein mit dem Formwerkzeug hergestelltes Partikelschaumstoffteil entformt werden kann, eine Zwischenstellung (nicht dargestellt), in welcher die Stempel-Formhälfte 3 so weit in die Matrizen-Formhälfte 2 eingeführt ist, dass das Formnest 13 geschlossen ist, jedoch das Formnest 13 noch nicht auf sein endgültiges Volumen in der geschlossenen Stellung (Fign. 1, 3, 5, 6) verringert ist.

In der Zwischenstellung sind die Einfüllöffnung 9 und die allfällige Entlüftungsöffnung nicht von der Stempel-Formhälfte 3 abgedeckt, sodass diese Durchgangsöffnungen mit dem Formnest 13 kommunizieren und Schaumstoffpartikel eingefüllt bzw. Luft abgeführt werden können. In der Zwischenstellung wird das Formnest 13 mit Schaumstoffpartikeln gefüllt. Danach wird die Stempel-Formhälfte 3 ein Stück weiter in die Matrizen-Formhälfte 2 eingedrückt, wobei die darin befindlichen Schaumstoffpartikel komprimiert werden.

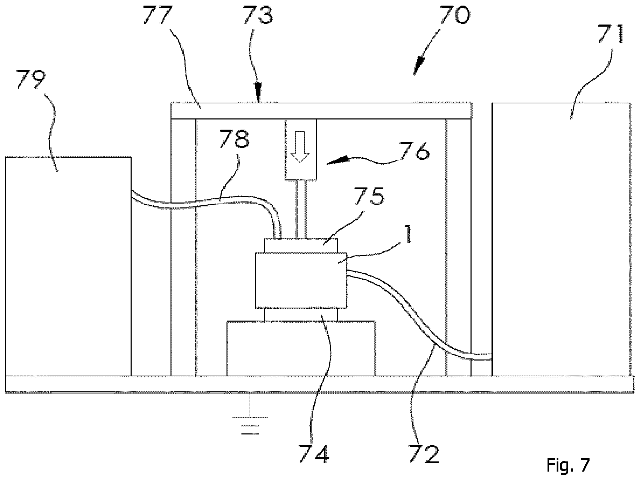

Das Werkzeug 1 kann in einer Vorrichtung 70 zum Erzeugen von Partikelschaumstoffteilen eingesetzt werden (Fig. 7). Eine solche Vorrichtung weist einen Vorratsbehälter 71 auf, der mit dem Einfüllschlauch 72 mit dem Werkzeug 1 verbunden ist. Das Werkzeug 1 wird in einer Presse 73 angeordnet, welche einen Pressentisch 74, einen Press-Stempel 75, eine Zylinder-Kolbeneinheit 76 zum Bewegen des Press-Stempels 75 und einen stabilen Rahmen 77 aufweist, an welchem die Zylinder-Kolbeneinheit 76 und der Pressentisch 74 befestigt sind. Der Press-Stempel 75 ist aus einer elektrisch leitenden Metallplatte ausgebildet. In Abwandlung des Ausführungsbeispiels von Fig. 1, bei dem die zweite Formplatte 5 einen Wellenleiteranschluss 6 aufweist, ist hier der Press-Stempel 75 über eine Wellenleitung 78, z.B. in Form eines Koaxialkabels, mit einem Wellengenerator 79 verbunden. Der Pressentisch 74 weist eine elektrisch leitende Tischplatte aus Metall auf, welche über eine elektrisch leitende Grundplatte mit Masse verbunden ist.

Nachfolgend wird die Verwendung des Werkzeuges 1 zum Herstellen eines Partikelschaumstoffteils in der Vorrichtung 70 erläutert.

Das Werkzeug 1 befindet sich zunächst in einer Zwischenstellung. Hierbei ist die Stempel-Formhälfte 3 so weit in die Matrizen-Formhälfte 2 eingesetzt, dass das Formnest 13 im Wesentlichen geschlossen ist. In dieser Zwischenstellung wird das Werkzeug 1 in die Presse 73 eingesetzt. Der Einfüllschlauch 72 wird an die Einfüllöffnung 9 des Werkzeuges 1 angeschlossen.

Aus dem Vorratsbehälter 71 werden Schaumstoffpartikel dem Formnest 13 zugeführt. Ist das Formnest 13 vollständig mit Schaumstoffpartikel gefüllt, dann wird die Zylinder-/Kolbeneinheit 76 betätigt, um die beiden Aufspannplatten 13, 16 und damit die beiden Formhälften 2, 3 zusammenzudrücken. Das Werkzeug 1 wird so in die geschlossene Stellung gebracht. Hierdurch werden die im Formnest 13 befindlichen Schaumstoffpartikel komprimiert.

Beim Zusammendrücken der beiden Formhälften 2, 3 wird von der Stempel-Formhälfte 3 die Einfüllöffnung 9 der Matrizen-Formhälfte 2 abgedeckt und damit verschlossen. Danach kann der Einfüllschlauch 72 vom Werkzeug 1 abgezogen werden. Es kann dann ein Stöpsel in die Einfüllöffnung 9 eingesteckt werden, der eine ähnliche Dielektrizitätskonstante wie die Seitenwandung 8 aufweist.

Im zusammengedrückten bzw. geschlossenen Zustand des Werkzeuges 1 wird mit dem Wellengenerator 79 ein elektromagnetisches Hochfrequenzsignal (RF- oder Mikrowellensignal) erzeugt, das über den Wellenleiter 78, den Press-Stempel 75 an die obere Kondensatorplatte 5 der Stempel-Formhälfte 3 angelegt wird. Der Wellenleiter 78 kann hohl sein und kann eine Seele aufweisen. Die untere Kondensatorplatte 4 der Matrizen-Formhälfte 2 ist über den Pressentisch 74 mit Masse verbunden. Die Kondensatorplatten 4, 5 sind durch die elektrisch nicht leitenden Grundkörper der Formhälften 2, 3 voneinander elektrisch isoliert, so dass sie einen Plattenkondensator bilden, der das Formnest 13 umgibt. Durch das so erzeugte elektromagnetische Feld werden die Schaumstoffpartikel erhitzt und miteinander zu einem Partikelschaumstoffteil verschweißt.

Die Presse 73 kann geöffnet werden, sodass das Werkzeug 1 entnommen werden kann. Falls das Werkzeug Verriegelungseinrichtungen aufweise, kann es im geschlossenen Zustand entnommen werden. Es kann dann mittels einer geeigneten Kühleinrichtung, wie zum Beispiel eines Gebläses, gekühlt werden. Während das Werkzeug 1, in dem bereits ein Partikelschaumstoffteil ausgeformt ist, gekühlt wird, kann ein weiteres Werkzeug 1 in die Presse 73 eingesetzt werden.

Ist das Partikelschaumstoffteil ausreichend gekühlt, werden die beiden Formhälften 2, 3 ggf. gelöst, wird die Stempel-Formhälfte 3 abgehoben, und das Partikelschaumstoffteil kann entsprechend entformt werden.

Die Kondensatorplatten 4, 5 sind in diesem Ausführungsbeispiel Teil der Vorrichtung 70 und können für eine Vielzahl von Werkzeugen 1 verwendet werden. Sie dienen insbesondere auch als Pressplatten in der Vorrichtung 70. Es ist in dem Zusammenhang auch unerheblich, ob das Werkzeug 1 in der in Fig. 1 etc. gezeigten Orientierung von oben und unten oder umgekehrt zwischen den Kondensatorplatten 4, 5 eingesetzt wird.

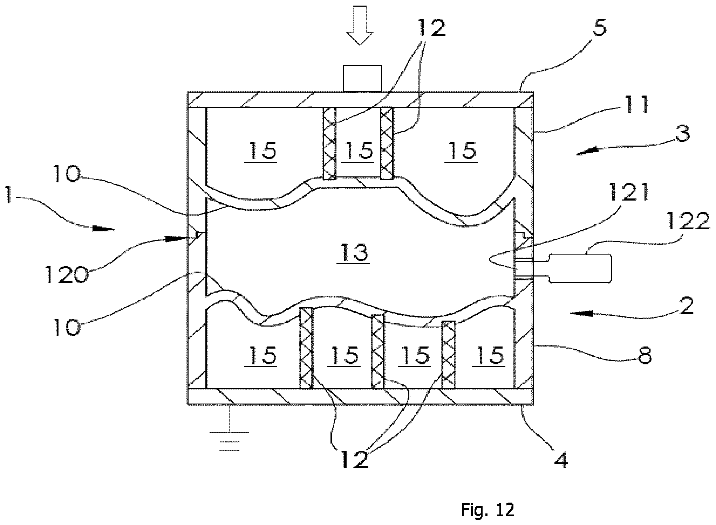

Das erfindungsgemäße Werkzeug kann auf vielfältige Weise abgewandelt werden. Bei einem Werkzeug 1 nach einem weiteren Ausführungsbeispiel sind beide Formhälften 2, 3 mit Hohlräumen 15 zum Trimmen der jeweiligen Formhälften ausgebildet, um ein elektromagnetisches Feld innerhalb des Formnests 13 zu beeinflussen (Fig. 12). Die erste Formhälfte 2 ist also bei diesem Ausführungsbeispiel grundsätzlich in dieser Hinsicht analog der zweiten Formhälfte 3 aufgebaut, sodass die Stege 12 und die Seitenwandung 8 der ersten Formhälfte 2 Stützen für die erste Kondensatorplatte 4 bilden.

Bei diesem Ausführungsbeispiel sind die Stege 12 auch nicht einstückig mit den Formhälften 2, 3 ausgebildet wie bei vorherigen Ausführungsbeispielen, sondern als eigenständige Bauteile in entsprechenden Nuten auf der von dem Formnest 13 abgewandten Seite der Begrenzungswandungen 10 eingesetzt. Gegebenenfalls können entsprechende, vertikal verlaufende Nuten auch in den Innenflächen der Seitenwandungen 8, 11 der Formhälften 2, 3 vorgesehen sein, um den Stegen 12 Halt zu geben. Alternativ oder ergänzend können die Stege 12 auch angeklebt, angeschweißt, oder zwischen den Seitenwandungen 8, 11 verklemmt sein.

Die Erfindung ist auch nicht auf das Crackspalt-Verfahren beschränkt. Bei dem Werkzeug 1 dieses Ausführungsbeispiels sind die Formhälften 2, 3 nicht als Stempel und Matrize ausgebildet, sondern stoßen stirnseitig mit ihren Seitenwandungen 8, 11 aneinander. Hierzu weisen die Seitenwandungen 8, 11 zueinander passende Stufungen 120 auf, um das Formnest 13 bei aufbauendem Prozessdruck abzudichten. Ferner weist das Werkzeug 1 dieses Ausführungsbeispiels eine Einfüllöffnung 121 auf, die bei geschlossenem Werkzeug 1 frei bleibt und an die ein Füllinjektor 122 anschließbar ist, mit welchem die Schaumpartikel in das Formnest 13 eingebracht werden.

Von den vorstehenden Abwandlungen abgesehen, gilt das zuvor für alle anderen Ausführungsbeispiele und deren Varianten und Abwandlungen Gesagte sinngemäß, soweit grundsätzlich anwendbar. Auch sind die vorstehenden Abwandlungen nicht nur in ihrer Gesamtheit, sondern auch einzeln für sich genommen Abwandlungen jedes anderen Ausführungsbeispiels und dessen Varianten und Abwandlungen weitere eigenständige Ausführungsvarianten, soweit grundsätzlich anwendbar.

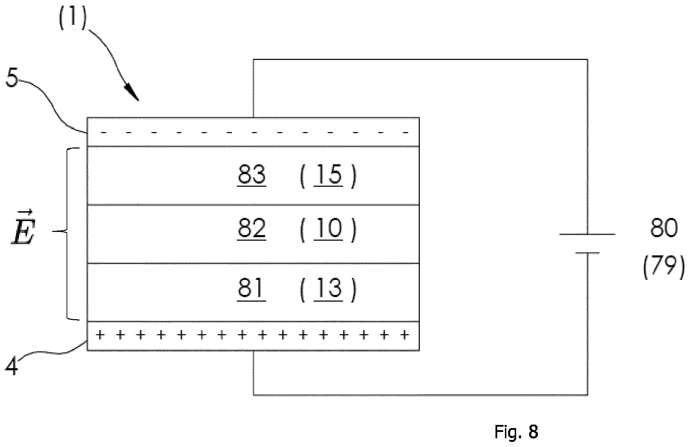

Die Erfinder der vorliegenden Anmeldung haben Simulationen zur Wirkung der vorliegenden Erfindung gemacht. Zunächst wurde ein vereinfachtes Modell anhand eines Ersatzbildes betrachtet (Fig. 8). Dabei sind die Kondensatorplatten 4, 5 mit einer Spannungsquelle 80 verbunden, die einem Polarisierungszustand des Wellengenerators 79 entspricht. Dementsprechend sind die Kondensatorplatten 4, 5 entgegengesetzt geladen. Zwischen den Kondensatorplatten 4, 5 befinden sich mehrere Bereiche 81, 82, 83 mit jeweils unterschiedlichen, ggf. auch lokal verteilten dielektrischen Eigenschaften. Für die Simulation sind mindestens drei Bereiche erforderlich, von denen ein erster Bereich 81 dem Formnest 13 entspricht, ein zweiter Bereich 82 der Begrenzungswandung 10 entspricht und ein dritter Bereich 83 einem Hohlraum 15 des Werkzeugs 1 entspricht. Zwischen den Kondensatorplatten 4, 5 bildet sich unter dieser Vorgabe ein elektromagnetisches Feld **E** aus, dessen Stärke von den jeweiligen Permittivitäten der Bereiche 81, 82, 83 abhängt. Mit diesem Modell können Feldstärkenverläufe des elektromagnetischen Felds **E** zwischen den Kondensatorplatten 4, 5 berechnet werden. Bei Bedarf bzw. zur weiteren Annäherung an konkrete Formen des Werkzeugs 1 bzw. eines Werkzeugsystems mit Trimmkörpern können weitere Bereiche definiert werden.

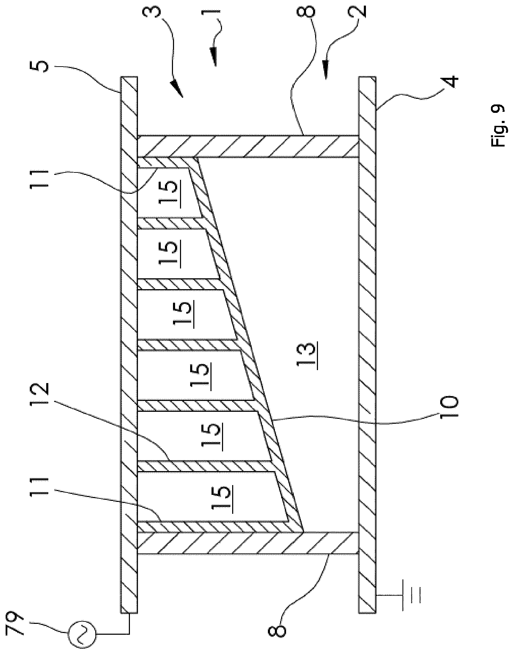

Beispielsweise sieht ein Modell im Schnitt zwei zwischen den Kondensatorplatten 4, 5 sich erstreckende Seitenwandungen 8 der ersten Formhälfte 2 vor (Fig. 9). Eine Bodenwandung (Bz. 7 in Fign. 1, 3, 5, 6) ist in diesem Modell nicht vorgesehen. Die Kondensatorplatten 4, 5 ragen bei diesem Modell seitlich über die Seitenwandung 8 der ersten Formhälfte 2 hinaus. Die erste Kondensatorplatte 4 ist geerdet, die zweite Kondensatorplatte 5 ist mit einem Wellengenerator 79 verbunden. Zwischen den Seitenwandungen 8 erstreckt sich eine Begrenzungswandung 10 der zweiten Formhälfte 3 in einer schrägen geraden Linie. Von der Begrenzungswandung 10 führen Seitenwandungen 11 und Stege 12 (d.h., Stützen 11, 12 im Sinne der Erfindung) zu der zweiten Kondensatorplatte 5, um zwischen sich Hohlräume 15 zu belassen (im Schnitt sechs Hohlräume 15, ohne Beschränkung der Allgemeinheit). Zwischen der ersten Kondensatorplatte 4, den Seitenwänden 8 der ersten Formhälfte 2 und der Begrenzungswandung 10 ist ein Formnest 13 definiert, das in diesem Modell keilförmig ist. Die Seitenwandungen 8, 11, Begrenzungswandung 10 und Stege 12 sind in etwa gleich stark, weisen eine relative Permittivität von etwa εr=3,2 auf und stoßen winklig aneinander. Das Formnest 13 und die Hohlräume 15 sind zunächst leer (d.h., mit Luft gefüllt, εr=1).

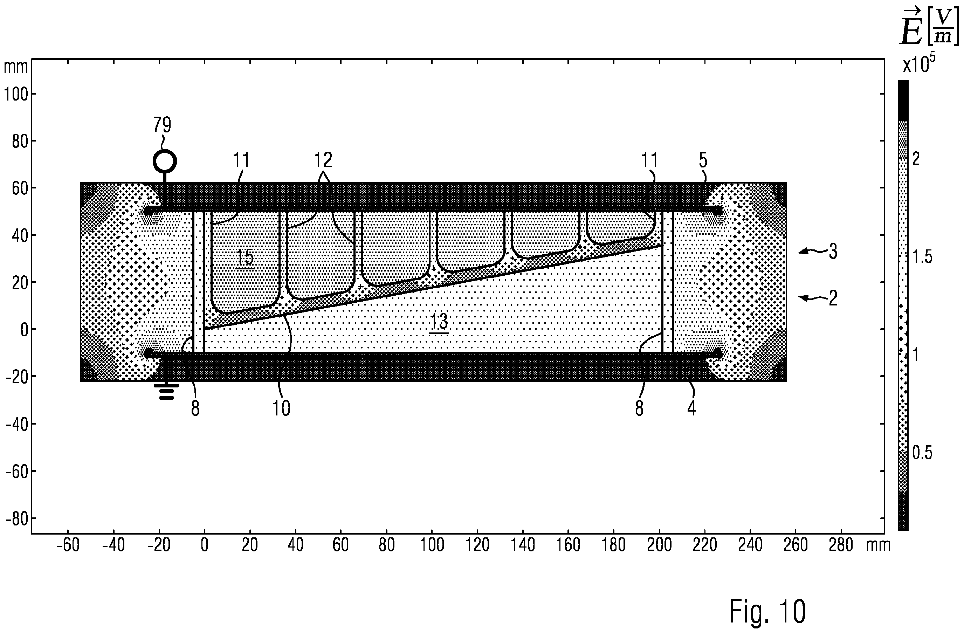

Dieses Modell wurde einer Simulation der Feldstärkenverteilung unterworfen (Fig. 10). Dabei wurde mittels des Wellengenerators 79 ein elektromagnetisches Feld **E** zwischen den Kondensatorplatten 5, 6 erzeugt, das ohne Störungen eine Feldstärke von |**E**| = 1,5 E5 V/m aufweist. In der Figur sind Isolinien in Abstufungen von etwa 0,25 E5 V/m eingezeichnet. Es versteht sich, dass die Übergänge der Feldstärke nicht stufig, sondern fließend sind. Es zeigt sich, dass die Feldstärke innerhalb der Begrenzungswandung 10 bis auf etwa 0,75 E5 V/m abfällt, wobei die geringste Feldstärke an den Teilen der Begrenzungswandung 10 vorkommt, die die Hohlräume 15 begrenzen, während die Feldstärke in Teilen der Begrenzungswandung 10, die an Stützen 11, 12 grenzen, etwas höher ist. Innerhalb der Stützen 11, 12 wie auch der Seitenwandung 8 der ersten Formhälfte 2 abgesehen von Stellen, in denen sie auf die Begrenzungswandung 10 stoßen, ist die Feldschwächung vernachlässigbar. Innerhalb des Formraums 13 stellt sich an den Stellen, die der Stützen 11, 12 gegenüberliegen, eine lokal eng begrenzte Erhöhung der Feldstärke ein, ebenso wie am Grund der Hohlräume 15. Allerdings ist dieser Effekt äußerst gering. Dies hängt damit zusammen, dass die Feldschwächung innerhalb der Stützen 11, 12, wie zuvor gesagt, vernachlässigbar ist.

Die praktisch verschwindende Feldschwächung in den Stützen 11, 12 ist zunächst überraschend, wäre doch zunächst aufgrund der dielektrischen Eigenschaften eine Feldschwächung in der Größenordnung der Begrenzungswandung 10 zu erwarten. Eine derartige Feldschwächung in den Stützen 11, 12 würde auch zu einer deutlichen Inhomogenität des Feldes im Formnest 13 gegenüber den Stützen 11, 12 führen und wäre schwer zu handhaben. Die Erfinder der vorliegenden Anmeldung haben aber durch theoretische Überlegungen, Simulationen und Versuche festgestellt, dass eine solche Auswirkung nicht vorliegt, was die Ausführung der Erfindung erst praktikabel macht. Eine theoretische Erklärung für dieses Verhalten wird möglich, wenn man die Anordnung zwischen den Kondensatorplatten 4, 5 in Breitenrichtung in schmale Elemente unterteilt und die Elemente zunächst einzeln betrachtet und dann überlagert. Enthält ein solches Element eine Stütze 11, 12 aus einem Dielektrikum, würde sich dort tatsächlich eine Feldschwächung einstellen. Diese wird allerdings durch eine Feldverstärkung, die sich im Randbereich eines benachbarten Elements (also seitlich über das benachbarte Element hinausragend) einstellt, überlagert und ausgelöscht.

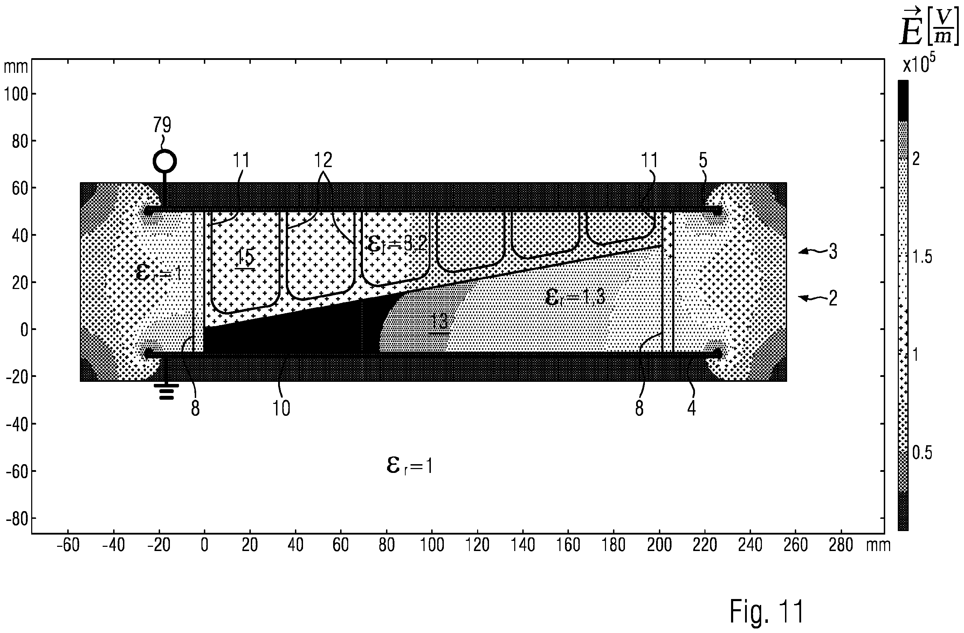

Auf der Basis des gleichen Modells wurde eine weitere Simulation durchgeführt, bei der die Hohlräume 15 mit einem Dielektrikum einer relativen Permittivität von etwa εr=3,2 vollständig gefüllten waren und das Formnest mit einem Dielektrikum einer relativen Permittivität von etwa εr=1,3 vollständig gefüllten war (Fig. 11). Es zeigt in Fall sich diesem eine deutliche Abschwächung des Feldes im gesamten Bereich der zweiten Formhälfte 3 (genauer, im linken, höheren Bereich eine geringere Abschwächung auf etwa 1 bis 1,25 E5 V/m und im rechten, weniger hohen Bereich die größte Abschwächung auf etwa 0,75 E5 V/m) und eine deutliche Verstärkung des Feldes im gesamten Bereich des Formnests 13 (genauer, im linken, weniger hohen Bereich die größte Verstärkung auf über 2,5 E5 V/m und im rechten, höheren Bereich eine geringere Verstärkung auf etwa 1,75 bis 2 E5 V/m).

Es wurde vorstehend gezeigt, dass in einem Werkzeug zum Herstellen von Partikelschaumstoffteilen durch Verschweißen von Schaumstoffpartikeln mittels elektromagnetischer Wellen eine Struktur einer Formhälfte aus einem dielektrischen Material mit einer Begrenzungswandung 10 zum Formnest 13 und Stützen 11, 12, welche Hohlräume 15 auf der von dem Formnest abgewandten Seite ausbilden, es ermöglicht, im Formnest 13 ein elektromagnetisches Feld mit einer guten Homogenität herzustellen. Durch die optionale, gezielte und selektive Einbringung von Trimmkörpern 30, 50 in den Hohlräumen 15 wird die Formhälfte und damit das Werkzeug trimmbar in dem Sinn, dass ein elektromagnetisches Feld im Formnest 13 gezielt beeinflusst werden kann.

Eine Weiterbildung der Erfindung sieht als weiteres Ausführungsbeispiel vor, dass die Trimmung der Formhälfte während eines Schäumvorgangs veränderbar ist. Der Schäumvorgang umfasst hierbei einen Zeitraum vom Einbringen der Schaumpartikel bis zum Entnehmen des Partikelschaumkörpers. Natürlich schließt das nicht aus, dass die Trimmung auch vor und/oder nach dem Schäumvorgang verändert wird. Zu diesem Zweck wird ein Trimmkörper in Form eines Fluids verwendet und dieses Fluid über Trimmfluidleitungen dem Hohlraum oder den Hohlräumen zugeführt und/oder aus dem Hohlraum oder den Hohlräumen entfernt. Die Formhälfte und/oder die zugehörige Kondensatorplatte ist/sind so ausgebildet, dass dies auch während eines Schäumvorgangs, also insbesondere bei zwischen den Kondensatorplatten montiertem Werkzeug und/oder bei geschlossenem Formnest geschehen kann. Alternativ oder ergänzend kann die Zuführung/Abführung des Trimmfluids auch über eine Trimmfluid-Versorgungseinheit, die zwischen der Formhälfte und der Kondensatorplatte angeordnet wird, erfolgen. Als Trimmfluid kann beispielsweise Wasser, ein Öl oder eine viskose Flüssigkeit (z.B. Gel) verwendet werden. Vorzugsweise wird als Trimmfluid ein Fluid mit einer geringen relativen Permittivität ausgewählt. Bei diesem Ausführungsbeispiel ist es möglich, eine Veränderung in der relativen Permittivität, die durch Entweichen von Wasser(dampf) aus dem Formnest 10 im Verlauf des Schäumvorgangs verursacht wird, durch gezieltes Einbringen oder Entfernen des Trimmfluids in den Hohlräumen 15 auszugleichen.

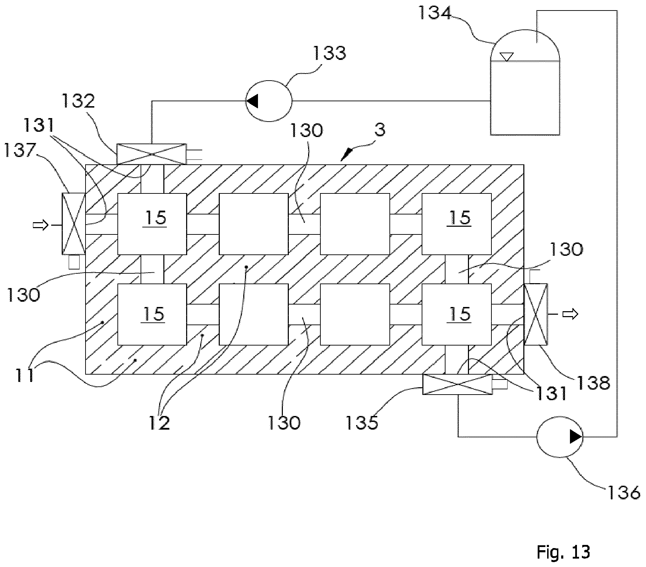

In einem Ausführungsbeispiel sind Bohrungen 130 in den Seitenwandungen 11 und den Stegen 12 vorgesehen, welche die Hohlräume 15 in der zweiten Formhälfte 3 kommunizierend verbinden (Fig. 13). Die Bohrungen 130 sind in der dargestellten Variante jeweils von einer Seite durch eine Seitenwandung 11 durchgehend über die gesamte Länge bzw. Breite der Formhälfte 3 durch alle in einer Linie liegenden Stege 12 hindurch bis zum letzten auf der Linie liegenden Hohlraum 15 ausgebildet und bilden jeweils wenigstens eine Öffnung 131 in einer Seitenwandung 11 aus. An einer der Öffnungen 131 ist ein Trimmfluid-Zuführungsanschluss 132 mit Ventil angebracht, der über eine Speisepumpe 133 mit einem Trimmfluid-Vorratsbehälter 134 verbunden ist. An einer anderen der Öffnungen 131 ist ein Trimmfluid-Abführungsanschluss 135 mit Ventil angebracht, der über eine Trimmfluid-Entleerungspumpe 136 mit dem Trimmfluid-Vorratsbehälter 133 verbunden ist. An einer weiteren der Öffnungen 131 ist ein Zuluftanschluss 137 mit Ventil angebracht, und an einer letzten der Öffnungen 131 ist ein Entlüftungsanschluss 138 mit Ventil angebracht. Der Zuluftanschluss 137 und der Entlüftungsanschluss können jeweils mit einer Fluidsperre ausgestattet sein. Der Zuluftanschluss 137 kann mit einem Druckluftbehälter oder einer Zuluftpumpe verbunden sein, und der Entlüftungsanschluss 138 kann mit einem Vakuumbehälter oder einer Vakuumpumpe verbunden sein.

Zur Füllung der Hohlräume 15 mit dem Trimmfluid werden der Trimmfluid-Zuführungsanschluss 132 und der Entlüftungsanschluss 138 geöffnet und wird die Speisepumpe 133 in Betrieb gesetzt, um Trimmfluid aus dem Trimmfluid-Vorratsbehälter 134 den Hohlräumen 15 zuzuführen. Durch die kommunizierende Verbindung über die Bohrungen 130 werden alle Hohlräume 15 erreicht. Über den Entlüftungsanschluss 138 kann überschüssige Luft entweichen. Wenn die Hohlräume 15 mit einer vorbestimmten Menge an Trimmfluid gefüllt sind, werden der Trimmfluid-Zuführungsanschluss 132 und der Entlüftungsanschluss 138 geschlossen und wird die Speisepumpe 133 abgeschaltet. Die Menge an Trimmfluid kann vorab festgelegt werden. Das Erreichen der vorbestimmten Menge kann beispielsweise durch eine Durchflussmessung an der Speisepumpe 133 festgestellt oder durch Auslegung derselben als Dosierpumpe sichergestellt werden. Alternativ kann ein vollständiges Füllen der Hohlräume 15 durch Auslösen einer Fluidsperre des Entlüftungsanschlusses 138 erkannt werden.

Zur Entleerung der Hohlräume 15 werden der Trimmfluid-Abführungsanschluss 135 und der Zuluftanschluss 137 geöffnet und wird die Trimmfluid-Entleerungspumpe 136 in Betrieb gesetzt, um Trimmfluid aus der Formhälfte 3 abzuziehen und dem Trimmfluid-Vorratsbehälter 134 wieder zuzuführen. Somit kann das Trimmfluid auch im Kreislauf geführt werden. Durch die kommunizierende Verbindung über die Bohrungen 130 werden alle Hohlräume 15 erreicht. Über den Zuluftanschluss 137 können die Hohlräume 15 drucklos gehalten werden oder kann über Druckluft das Abführen von Trimmfluid unterstützt werden. Wenn die Hohlräume 15 entleert sind, werden der Trimmfluid-Abführungsanschluss 135 und der Zuluftanschluss 137 geschlossen und wird die Trimmfluid-Entleerungspumpe 136 abgeschaltet.

Der Trimmfluid-Zuführungsanschluss 132 und/oder der Trimmfluid-Abführungsanschluss 135 können jeweils optional ohne Ventil ausgebildet sein, wenn die jeweilige Pumpe 133, 136 über entsprechende Sperrvorrichtungen verfügt. Optional können die Pumpen 133, 136 in den jeweiligen Trimmfluid-Anschlüssen 132, 135 integriert oder an diesen angebracht sein oder können die Ventile der Trimmfluid-Anschlüsse 132, 135 in den jeweiligen Pumpen 133, 136 integriert oder an diesen angebracht sein.

In der dargestellten Ausführungsvariante enden die Bohrungen 130 jeweils in dem letzten auf der Bohrlinie liegenden Hohlraum 15. Alternativ können die Bohrungen 130 auch über den letzten Hohlraum 15 hinaus durch die dort angrenzende Seitenwandung 11 durchgehen. Dies erhöht die Anschlussmöglichkeiten und ermöglicht dadurch auch eine Anpassung an die Gegebenheiten auf Anlagenseite. Nicht benötigte Öffnungen in den Seitenwandungen 11 können durch Blindstopfen verschlossen werden.

In einer Ausführungsvariante können die Bohrungen 130 auf einer ersten Ebene in Bezug auf eine Höhe der Formhälfte 3 ausgebildet sein und können weitere Bohrungen (nicht explizit dargestellt) auf einer zweiten, höheren Ebene ausgebildet sein, wobei die Trimmfluid-Anschlüsse 132, 135 an den Öffnungen 131 auf der ersten Ebene angeschlossen sind und der Zuluftanschluss 137 und der Entlüftungsanschluss 138 auf der zweiten Ebene angeschlossen sind. Nicht benötigte Öffnungen in den Seitenwandungen 11 sind dann durch Blindstopfen verschlossen.

Anstelle von Bohrungen können bei Ausbildung der Formhälfte 3 durch ein additives Herstellungsverfahren auch durch Durchlässe in den Seitenwandungen 11 und den Stegen 12 ersetzt werden. Dabei können auch zusätzliche Verbindungen in den Stegen 12 geschaffen werden, ohne eine Bohrung von außen zu benötigen. Auch kann dabei die Bildung nicht benötigter Öffnungen in den Seitenwandungen 11 vermieden werden.

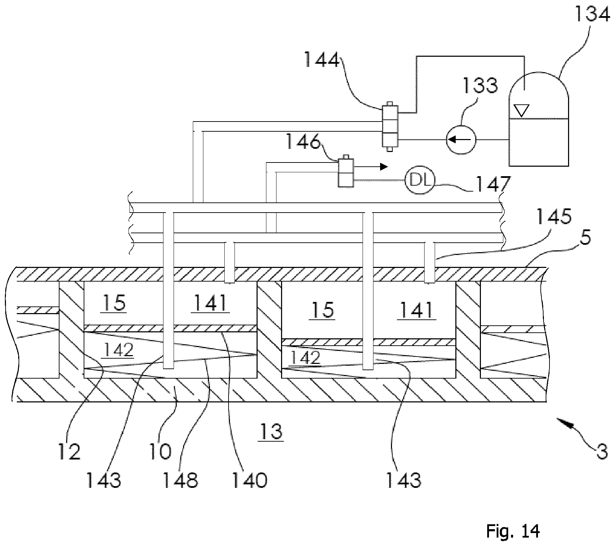

In einem weiteren Ausführungsbeispiel sind in den Hohlräumen 15 der oberen Formhälfte 3 jeweilige Deckel 140 angeordnet, die den jeweiligen Hohlraum in einen Trimmraum 142 unterhalb des Deckels 140 und einen Druckraum 141 oberhalb des Deckels 140 unterteilen (Fig. 14). Die Deckel 140 werden durch jeweilige in dem Trimmraum 142 angeordnete Druckfedern 148 nach oben gedrängt. Durch jeweilige Bohrungen in den Deckeln 140 und in dem an die obere Formhälfte 3 angrenzenden Kondensatorplatte 5 ragen Trimmfluidleitungen 143 in den Trimmraum 142 jedes Hohlraums 15. Die Trimmfluidleitungen 143 laufen außerhalb des Werkzeugs zusammen und sind an einem Trimmfluidventil 144 angeschlossen, das hier als Wegeventil ausgestaltet ist. Über das Trimmfluidventil 144 kann in einer ersten Schaltstellung über eine Trimmfluid-Speisepumpe 133 Trimmfluid aus einem Trimmfluid-Vorratsbehälter 134 in die Trimmfluidleitung 143 eingespeist werden. In einer zweiten Schaltstellung steht die Trimmfluidleitung 143 mit einer Rücklaufleitung in den Trimmfluid-Vorratsbehälter 134 in Verbindung. In einer dritten Schaltstellung (Neutralstellung) sind alle Anschlüsse des Trimmfluidventils 144 gesperrt. Durch weitere Bohrungen in der Kondensatorplatte 5 ragen Druckluftleitungen 145 in den Druckraum 141 jedes Hohlraums 15. Die Druckluftleitungen 145 laufen außerhalb des Werkzeugs zusammen und sind mit einem Druckluftventil 146 verbunden, das hier als Wegeventil ausgestaltet ist. In einer ersten Schaltstellung (Neutralstellung) ist die Druckluftleitung 145 mit der Atmosphäre verbunden. In einer zweiten Schaltstellung ist die Druckluftleitung 145 mit einem Druckluftbehälter 147 verbunden.

Zur Füllung der Hohlräume 15 mit dem Trimmfluid wird das Trimmfluidventil 144 von der Neutralstellung in die erste Schaltstellung geschaltet, wobei das Druckluftventil 146 in der ersten Schaltstellung mit Atmosphäre verbunden ist, und wird die Speisepumpe 133 in Betrieb gesetzt, um Trimmfluid aus dem Trimmfluid-Vorratsbehälter 134 über die Trimmfluidleitungen 143 den Trimmräumen in den Hohlräumen 15 zuzuführen. Durch die individuelle Verbindung über die Trimmfluidleitungen 143 mit der Trimmfluid-Speisepumpe 133 werden alle Hohlräume 15 gleichzeitig und rasch mit Trimmfluid gefüllt. Über das Druckluftventil 146 kann überschüssige Luft entweichen, wenn die Deckel 140 in den Hohlräumen 15 hochgedrückt werden. Wenn die Hohlräume 15 mit einer vorbestimmten Menge an Trimmfluid gefüllt sind, wird das Trimmfluidventil 144 in die Neutralstellung geschaltet und damit ein Fluss von Trimmfluid blockiert und wird die Speisepumpe 133 abgeschaltet. Durch die Wirkung der Druckfeder 148, welche die Deckel 140 nach oben drückt, kann sich die Menge an Trimmfluid zwischen den einzelnen Hohlräumen 15 aneinander angleichen. Das Erreichen der vorbestimmten Menge kann beispielsweise durch eine Durchflussmessung an der Speisepumpe 133 festgestellt oder durch Auslegung derselben als Dosierpumpe sichergestellt werden.

Zur Entleerung der Hohlräume 15 wird das Trimmfluidventil 144 in die zweite Schaltstellung geschaltet und wird das Druckluftventil in die zweite Schaltstellung geschaltet, um die Druckräume 141 der Hohlräume 15 mit Druckluft zu beaufschlagen. Die Druckluft in den Druckräumen 141 drückt die Deckel 140 nach unten, wodurch das in den Trimmräumen 142 befindliche Trimmfluid in die Trimmfluidleitungen 143 und aus der Formhälfte 3 gedrückt wird und dem Trimmfluid-Vorratsbehälter 134 wieder zugeführt wird. Somit kann das Trimmfluid auch im Kreislauf geführt werden. Durch die individuelle Verbindung über die Druckluftleitungen 145 mit dem Druckluftbehälter 147 werden alle Hohlräume 15 gleichzeitig und rasch geleert. Wenn dieser Vorgang abgeschlossen ist, wird das Trimmfluidventil 144 in die Neutralstellung geschaltet und wird das Druckluftventil 146 wieder mit Atmosphäre.

In einer Abwandlung (nicht näher dargestellt) können die Trimmfluidleitungen 143 individuell mit jeweiligen Trimmfluidventilen für jeden Hohlraum 15 verbunden sein. Die Trimmfluidventile können an der Kondensatorplatte 5 angebracht oder in einer separaten Steuereinheit untergebracht oder zusammengefasst sein. Die Trimmfluidventile können dabei wie das Trimmfluidventil 144 aufgebaut sein und mit den jeweils anderen Wegen über eine gemeinsame Trimmfluid-Speiseleitung mit der Trimmfluid-Speisepumpe 133 bzw. über eine gemeinsame Trimmfluid-Rücklaufleitung mit dem Trimmfluid-Vorratsbehälter 134 verbunden sein.

In einer weiteren Abwandlung (nicht näher dargestellt) können die Druckluftleitungen 145 individuell mit jeweiligen Druckluftventilen für jeden Hohlraum 15 verbunden sein. Die Druckluftventile können an der Kondensatorplatte 5 angebracht oder in einer separaten Steuereinheit untergebracht oder zusammengefasst sein. Die Druckluftventile können dabei wie das Druckluftventil 146 aufgebaut sein und mit den jeweils anderen Wegen über eine gemeinsame Druckluftsammelleitung mit Druckluftbehälter 147 bzw., gegebenenfalls über eine gemeinsame Entlüftungsleitung, mit Atmosphäre verbunden sein.

In einer weiteren Abwandlung (nicht näher dargestellt) sind Abschnitte der Trimmfluidleitungen 143 und/oder der Druckluftleitungen 145 an einer Innenseite und/oder an einer Außenseite der Kondensatorplatte 5 separat anbringbar. Dabei können die Bohrungen in der Kondensatorplatte 5 beispielsweise mit Gewinden versehen sein, sodass ein innerer Teil der Trimmfluidleitungen 143 und/oder der Druckluftleitungen 145 an der Innenseite der Kondensatorplatte 5 anschraubbar ist und ein äußerer Teil der Trimmfluidleitungen 143 und/oder der Druckluftleitungen 145 an der Außenseite der Kondensatorplatte 5 anschraubbar ist. Beispielsweise kann ein innerer Teil der Trimmfluidleitungen 143 ein Rohrstück mit einem Gewindeende sein. Ferner kann ein innerer Teil der Trimmfluidleitungen 143 in unterschiedlichen Längen je nach Tiefe des zu versorgenden Hohlraums 15 sein.

In einer Weiterbildung der letztgenannten Abwandlung kann eine Anschlussplatte (nicht näher dargestellt) vorgesehen sein, welche in die Hohlräume 15 weisenden Abschnitte der Trimmfluidleitungen 143 und/oder der Druckluftleitungen 145 trägt. Die Abschnitte der Trimmfluidleitungen 143 können dabei beispielsweise als Rohrstücke ausgebildet sein, die mit der Anschlussplatte fest verbunden oder an ihr anbringbar sein können, etwa durch Schrauben, Stecken und/oder Kleben in entsprechenden Bohrungen. Die Abschnitte der Druckluftleitungen 145 können in gleicher Weise ausgebildet und angebracht sein oder bloße Öffnungen von entsprechenden Bohrungen sein, denn die Druckluftleitungen 145 müssen nicht in die Hohlräume 15 ragen. Dabei können Bohrungen in der Kondensatorplatte 5 mit Bohrungen in der Zwischenplatte fluchten, sodass die Abschnitte der Trimmfluidleitungen 143 und/oder der Druckluftleitungen 145, die an der Anschlussplatte angebracht sind, von außen durch die Bohrungen in der Kondensatorplatte 5 steckbar sind, sodass auch eine zuverlässige Ausrichtung der Anschlussplatte und der Kondensatorplatte gegeben ist. Die außen liegenden Teile der Trimmfluidleitungen 143 und der Druckluftleitungen 145 sind dann auf der Außenseite der Anschlussplatte anzubringen. Die Anschlussplatte kann beispielsweise aus Metall oder Kunststoff hergestellt sein. Die Anschlussplatte kann konventionell durch Bereitstellung einer Platte und von Rohrstücken, ggf. entsprechender spanender Bearbeitung und Montage hergestellt werden. Alternativ kann die Anschlussplatte samt eventuellen Rohrstücken der Leitungen 143, 145 durch ein additives Herstellungsverfahren in einem Stück ausgebildet sein.

In einer Variante kann die Anschlussplatte zwischen der Formhälfte 3 und der Kondensatorplatte 5 angeordnet/anordenbar sein. Auch in diesem Fall können Bohrungen in der Kondensatorplatte 5 mit Bohrungen in der Zwischenplatte fluchten, allerdings sind dann die außen liegenden Teile der Trimmfluidleitungen 143 und der Druckluftleitungen 145 sind auf der Außenseite der Kondensatorplatte 5 anzubringen. Ferner können bei dieser Variante kurze Rohrstücke als Abschnitte der Druckluftleitungen 145 auf der Außenseite der Anschlussplatte angeordnet sein und in die entsprechenden Bohrungen der Kondensatorplatte steckbar sein, sodass auch in diesem Fall eine zuverlässige Ausrichtung der Anschlussplatte und der Kondensatorplatte gegeben ist. Wenn die Anschlussplatte bei dieser Variante aus Metall hergestellt ist, kann sie in Bezug auf die Erzeugung des elektromagnetischen Feldes als funktionaler Teil der Kondensatorplatte 5 wirken. Wenn die Anschlussplatte bei dieser Variante aus Kunststoff hergestellt ist, kann sie zur dielektrischen Wirkung der Formhälfte 3 beitragen.

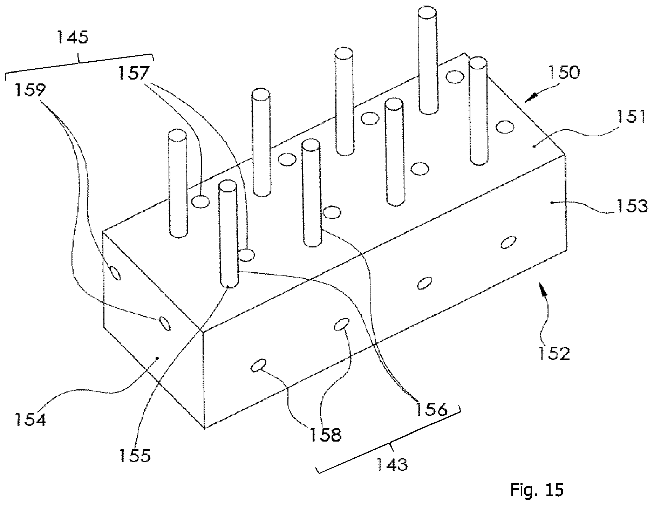

In einer weiteren Abwandlung kann eine Anschlussplatte 150 vorgesehen sein (Fig. 15), welche Abschnitte der Trimmfluidleitungen 143 und der Druckluftleitungen 145 aufnimmt oder aufweist, wobei sich die zur Formhälfte weisenden Abschnitte der Leitungen 143, 145 in der Fläche der Anschlussplatte 150 öffnen und die nach außen weisenden Abschnitte der Leitungen 143, 145 an einer Seitenkante oder mehreren Seitenkanten der Anschlussplatte 150 öffnen. Dort kann auch eine Schalteinheit mit Ventilen angeordnet sein. Konkret kann die Anschlussplatte 150 die Form eines Quaders aufweisen mit einer Innenfläche 151, einer dieser gegenüberliegenden Außenfläche 152, einer ersten Seitenfläche 153, welche die Innenfläche 151 und die Außenfläche 152 verbindet, einer zweiten Seitenfläche 154, welche an die ersten Seitenfläche 153 anschließt, und weiteren Seitenflächen, die der ersten Seitenfläche 153 und der zweiten Seitenfläche 154 jeweils gegenüberliegen. Die Innenfläche 151 weist eine erste Gruppe von Bohrungen 155 auf, die jeweils ein Rohrstück 156 tragen, und eine zweite Gruppe von Bohrungen 157 auf. Die erste Seitenfläche 153 trägt in einer der Außenfläche 152 nahen Ebene eine Gruppe von dritten Bohrungen 158, die jeweils auf eine Reihe der ersten Gruppe von Bohrungen 155 treffen. Die zweite Seitenfläche 154 trägt in einer der Innenfläche 151 nahen Ebene eine Gruppe von vierten Bohrungen 159, die jeweils auf eine Reihe der zweiten Gruppe von Bohrungen 157 treffen. Die erste Gruppe von Bohrungen 155 ist gegenüber der zweiten Gruppe von Bohrungen 157 diagonal versetzt angeordnet und die dritte Gruppe von Bohrungen 158 ist gegenüber der vierten Gruppe von Bohrungen 159 in der Höhe versetzt angeordnet, sodass die Bohrungen 155 der ersten Gruppe nur mit Bohrungen 158 der dritten Gruppe kommunizieren und umgekehrt und die Bohrungen 157 der zweiten Gruppe nur mit Bohrungen 159 der vierten Gruppe kommunizieren und umgekehrt. Somit bilden die Bohrungen 155 der ersten Gruppe mit Rohrstücken 156 und die Bohrungen 158 der dritten Gruppe jeweils Abschnitte der Trimmfluidleitung 143 und bilden die Bohrungen 157 der zweiten Gruppe und die Bohrungen 159 der vierten Gruppe jeweils Abschnitte der Druckluftleitung 145 (vgl. Fig. 14), und die Trimmfluidleitung 143 weist keine Überschneidungen mit der Druckluftleitung 145 auf.

Die Öffnungen der Bohrungen 158, 159 können durch jeweilige Leitungsstücke oder Anschlusseinheiten miteinander verbunden sein. Alle Bohrungen 155, 157, 158, 159 sind vorzugsweise als Sackbohrungen ausgeführt. Wenn sie als Durchgangsbohrungen ausgeführt sind, sollte eine Seite jeweils mit Blindstopfen verschlossen werden.

Obschon nicht näher dargestellt, können die Bohrungen 158 der dritten Gruppe durch eine erste Sammelbohrung in der zweiten Seitenfläche 154 oder der dieser gegenüberliegenden Seitenfläche miteinander verbunden werden und können die Bohrungen 159 der vierten Gruppe durch eine zweite Sammelbohrung in der ersten Seitenfläche 153 oder der dieser gegenüberliegenden Seitenfläche miteinander verbunden werden. Dann können die Bohrungen 158, 159 der dritten und vierten Gruppe durch Blindstopfen verschlossen werden, und es braucht nur noch die erste Sammelbohrung mit dem Trimmfluidventil 144 und die zweite Sammelbohrung mit dem Druckluftventil 146 verbunden werden.

Es versteht sich, dass die konkrete Anordnung der Bohrungen 155, 157, 158, 159 in Fig. 15 völlig beispielhaft zu verstehen ist. Insbesondere können die Bohrungen 158, 159 der dritten und vierten Gruppe auch auf einer einzigen Seitenfläche 153 oder 154 ausgebildet sein, in dem Fall sogar auf einer einzigen Ebene, ohne dass es zu Überschneidungen zwischen der Trimmfluidleitung 143 und der Druckluftleitung 145 kommt. Die in Fig. 15 gezeigte Anordnung hat jedoch den Vorteil, dass die Medien Trimmfluid und Druckluft anschlusstechnisch voneinander separiert sind.

Im Übrigen sind die Erläuterungen hinsichtlich der zuvor beschriebenen Anschlussplatte hinsichtlich Anordnung, Werkstoff und Herstellungsverfahren gleichermaßen auf die hier beschriebene Anschlussplatte 150 übertragbar.

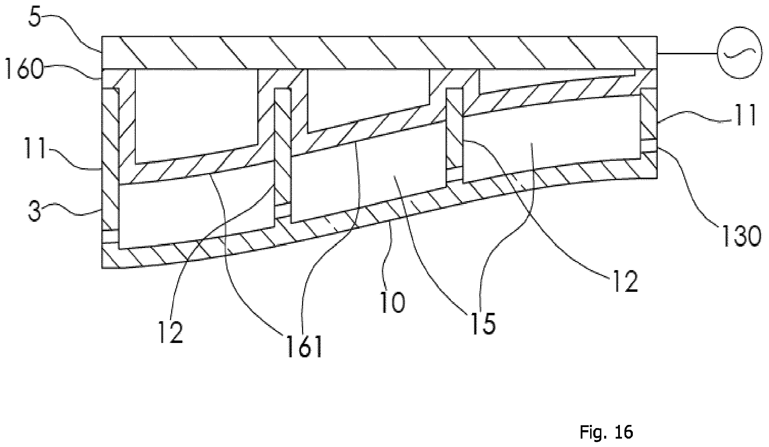

In einer weiteren Abwandlung kann ferner eine Deckplatte 160 vorgesehen sein, welche zwischen der Formhälfte 3 und der Kondensatorplatte 5 angeordnet ist und welche mehrere Vorsprünge aufweist, die in die Hohlräume 15 ragen und deren Volumen begrenzen (Fig. 16). Analog zu der in Fig. 13 gezeigten Anordnung kann eine oder mehrere Bohrungen 130 in der oberen Formhälfte 3 vorgesehen sein, welche in wenigstens einer Seitenwandung 11 eine Anschlussöffnung für Trimmfluid bildet und wenigstens einen der Stege 12 durchtrennt, um mehrere Hohlräume 15 der Formhälfte 3 fluidkommunizierend zu verbinden. Die Anordnung der Bohrungen ist grundsätzlich beliebig, solange allen Hohlräumen Trimmfluid zu- und abgeführt oder durchgeleitet werden kann. Die Vorsprünge 161 sind vorzugsweise so bemessen, dass die in den Hohlräumen 15 verbleibenden Volumina im Wesentlichen eine gleiche Höhe aufweisen, doch auch dies ist optional und kann an die Anforderungen angepasst werden. In Varianten können die Vorsprünge 161 austauschbare Elemente unterschiedlicher Höhen sein, die an der Deckplatte anbringbar sind. Die Bohrung(en) 130 ist/sind so ausgebildet, dass sie im Bereich der von den Vorsprüngen 161 belassenen Volumina liegen, und ferner so, dass alle in den Hohlräumen 15 verbleibenden Volumina mit Trimmfluid befüllbar und möglichst vollständig wieder entleerbar sind. So kann beispielsweise in Fig. 16 eine durch die Bohrung 130 in der rechten Seitenwandung 11 oben ausgebildete Öffnung als Zufuhranschluss für Trimmfluid dienen und kann eine durch die Bohrung 130 in der linken Seitenwandung 11 unten ausgebildete Öffnung als Abzugsanschluss für Trimmfluid dienen, sodass sowohl bei Einleiten als auch beim Abziehen des Trimmfluids die Gravitation ausgenutzt werden kann. Die Deckplatte 160 kann grundsätzlich durch ein Gießverfahren, durch Tiefziehen einer Platte, durch Ausfräsen und/oder Bohren aus dem Vollen oder durch ein additives Verfahren hergestellt werden. Bei additiver Herstellung (3-D-Druck) sind keine Bohrungen erforderlich, sondern können alle Anschluss- und Verbindungsöffnungen in einem Zug mit dem additiven Aufbau der Deckplatte 160 ausgebildet werden.

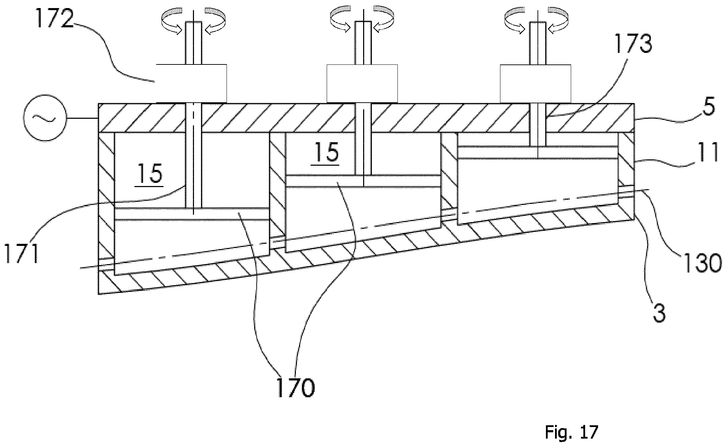

In einer weiteren Abwandlung können Deckel 170 vorgesehen sein, die jeweils in einem der Hohlräume 15 höhenbeweglich angeordnet sind und über einen Stößel 171 und einen an der oberen Kondensatorplatte 5 angebrachten Hubantrieb 172 individuell höhenverstellbar sind (Fig. 17). Die Stößel 171 sind in Bohrungen 173 in der oberen Kondensatorplatte gelagert. Die Stößel 171 können als Gewindestange ausgebildet sein, die in mit Innengewinde ausgebildeten Bohrungen 173 eingedreht sind, und können über eine Mitnehmernut (nicht näher dargestellt) durch den als Drehantrieb ausgebildeten Hubantrieb 172 gedreht werden, sodass durch das Drehen in den (Gewinde-)Bohrungen 173 eine Höhenverstellung bewirkt werden kann. Andere Einrichtungen zur Höhenverstellung sind in der Technik wohlbekannt und können alternativ je nach Anforderungen eingesetzt werden. Wie in Fig. 17 ist wenigstens eine Bohrung 130 zur Versorgung der Hohlräume 15 mit Trimmfluid vorgesehen; diesbezüglich gelten die vorstehenden Erläuterungen. Durch die Höhenverstellung können die Deckel ein Volumen der Hohlräume 15 individuell begrenzen (Fig. 16). Damit kann die relative Permittivität der Formhälfte nicht nur lokal angepasst werden, sondern kann auch im Lauf des Schäumvorgangs verändert werden. Außerdem kann auch ein Austreiben des Trimmfluids über die Bohrung 130 durch Zufahren der Deckel unterstützt werden.

Es versteht sich auch, dass alles, was vorstehend zur oberen Formhälfte 3 beschrieben wurde, sinngemäß und analog auf die untere Formhälfte 2 anwendbar ist.

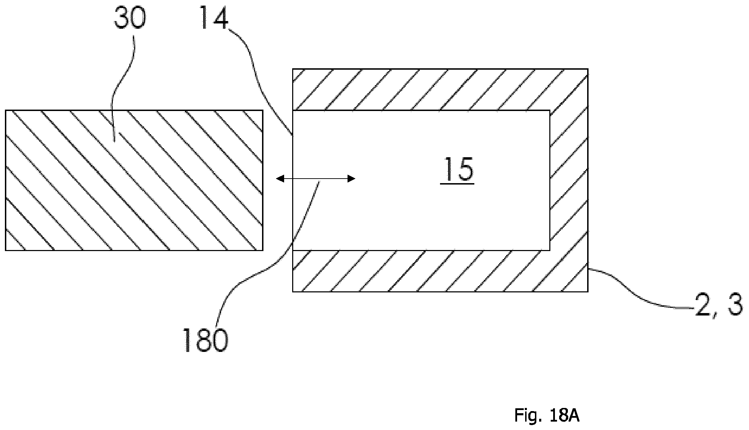

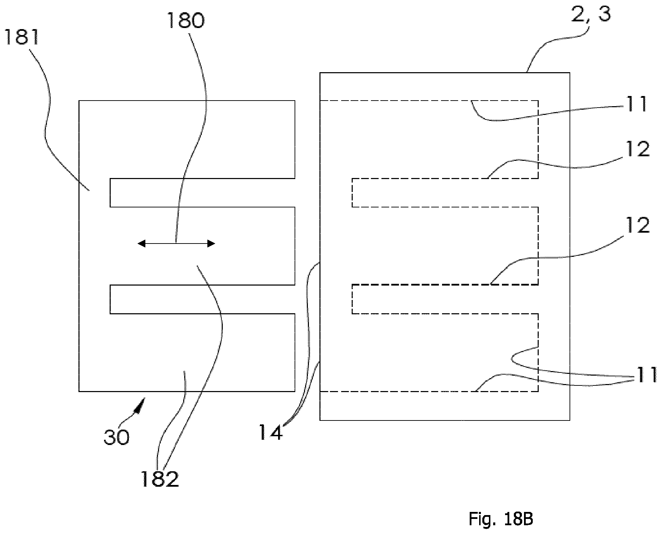

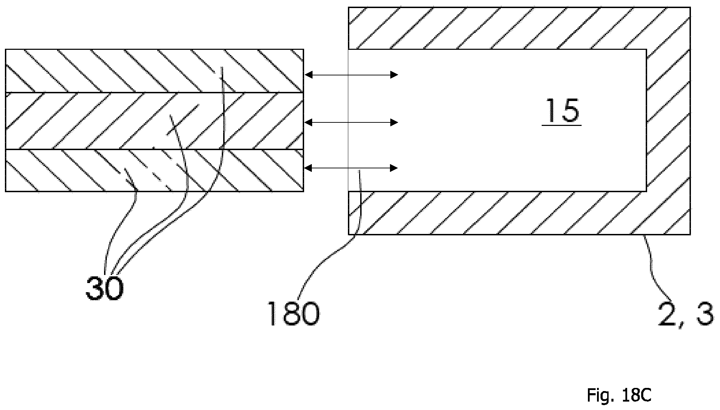

Nach einem weiteren Ausführungsbeispiel kann eine der Formhälften 2, 3 auch eine seitliche Öffnung oder mehrere seitliche Öffnungen 14 aufweisen, in die ein Formkörper 30 von der Seite einschiebbar und entfernbar ist (Fig. 18A, Bewegungsrichtung 180). Der Formkörper 30 kann kammförmig mit einer Basis 181 und mehreren quaderförmigen Zinken 182 ausgebildet sein (Fig. 18B). Alternativ können auch mehrere einzelne quaderförmige Formkörper 30 verwendet werden, die ggf. individuell gesteuert in die Hohlräume 15 ein- und ausfahrbar sind. Ein Werkzeugsystem mit solchen Formhälften 2, 3 und Formkörper 30 ist besonders, aber nicht nur, zur Herstellung von Partikelschaumplatten mit Hilfe von elektromagnetischen Wellen geeignet. In einer Weiterbildung können mehrere Formkörper 30 in Form von Platten von gleicher Form wie oben beschriebenen, aber geringerer Höhe, vorgesehen sein, die gemeinsam die Hohlräume 15 ausfüllen und individuell gesteuert in die Hohlräume 15 ein- und ausfahrbar sind (Fig. 18C).

Pumpen 133, 136, Anschlüsse 132, 135, 137, 138, Ventile 144, 146, Behälter 134, 147, Leitungen 143, 145 und weitere Verrohrungen können individuell und in jedweder Anordnung und/oder Unterkombination Bestandteil einer Trimmfluid-Bereitstellungseinrichtung sein. Eine Steuerung zum Steuern aller beschriebener Prozessvorgänge einschließlich der Ansteuerung von Motoren, Pumpen, Ventile sowie das Vorsehen geeigneter Sensorik zur Bereitstellung von Prozess- und Zustandsdaten für die Steuerung nach Bedarf ist selbstverständlich und bedarf keiner weiteren Erläuterung.

Vorstehend wurde die Erfindung anhand von Ausführungsbeispielen vollständig beschrieben.

Die Erfindung ist jedoch nur durch die beigefügten unabhängigen Ansprüche definiert und wird durch die abhängigen Ansprüche weiter entwickelt.

**Liste der Bezugszeichen**

| | | | |
|---|---|---|---|
| 1 | Werkzeug | 79 | Wellengenerator |
| 2 | erste (untere) Formhälfte (Matrizen-Formhälfte) | 80 | Spannungsquelle |
| | | 81-83 | Bereiche |
| 3 | zweite (obere) Formhälfte (Stempel-Formhälfte) | 130 | Bohrung |
| | | 131 | Öffnung |
| 4 | erste Kondensatorplatte (untere Kondensatorplatte) | 132 | Trimmfluid-Zuführungsanschluss (Ventil) |
| 5 | zweite Kondensatorplatte (obere Kondensatorplatte) | 133 | Trimmfluid-Speisepumpe |
| | | 134 | Trimmfluid-Vorratsbehälter |
| 6 | Wellenleiter-Anschluss | 135 | Trimmfluid-Abführungsanschluss (Ventil) |
| 7 | Bodenwandung | | |
| 8 | Seitenwandung | 136 | Trimmfluid-Entleerungspumpe |
| 9 | Einfüllöffnung | 137 | Zuluftanschluss (Ventil) |
| 10 | Begrenzungswandung | 138 | Entlüftungsanschluss (Ventil) |
| 11 | Seitenwandung (Stütze) | 140 | Deckel |
| 12 | Steg (Stütze) | 141 | Druckraum |
| 13 | Formnest | 142 | Trimmraum |
| 14 | Öffnung | 143 | Trimmfluidleitung |
| 15 | Hohlraum | 144 | Trimmfluidventil |
| 30 | Trimmkörper | 145 | Druckluftleitung |
| 41 | Absatz | 146 | Druckluftventil |
| 42 | Kranz | 147 | Druckluftbehälter |
| 43 | Rastung | 148 | Druckfeder |
| 50 | Trimmkörper | 150 | Anschlussplatte |
| 61 | Fluidzuflussöffnung | 151 | Innenfläche (zum Werkzeug) |
| 62 | Fluidabflussöffnung | 152 | Außenfläche (zur Kondensatorplatte) |
| 63 | Fluiddurchströmungsöffnung | 153, 154 | Seitenflächen |
| 64 | Fluidvorlaufanschluss | 155 | Bohrung (erste Gruppe) |
| 65 | Fluidrücklaufanschluss | 156 | Rohrstück |
| 66 | Ventil | 157 | Bohrung (zweite Gruppe) |
| 67 | Fluidquelle | 158 | Bohrung (dritte Gruppe) |
| 70 | Vorrichtung | 159 | Bohrung (vierte Gruppe) |
| 71 | Vorratsbehälter | 160 | Deckplatte |
| 72 | Einfüllschlauch | 161 | Vorsprung |
| 73 | Presse | 170 | Deckel |
| 74 | Pressentisch | 171 | Stößel |
| 75 | Press-Stempel | 172 | Hubantrieb |
| 76 | Zylinder-Kolbeneinheit | 173 | Bohrung |
| 77 | Rahmen | | |
| 78 | Wellenleiter | | |

Die vorstehende Liste ist integraler Bestandteil der Beschreibung.

## Patentansprüche

1. Werkzeug (1) zum Herstellen von Partikelschaumstoffteilen durch Verschweißen von Schaumstoffpartikel mittels elektromagnetischer Wellen, umfassend zwei Formhälften (2, 3), welche ein Formnest (13) begrenzen, wobei wenigstens eine, vorzugsweise jede, der beiden Formhälften (2, 3) aus einem für elektromagnetische Wellen transparenten Material ausgebildet ist und eine das Formnest (13) begrenzende Begrenzungswandung (10) und eine oder mehrerer Stützen (11, 12) aufweist, welche zum Abstützen der Begrenzungswandung (10) an einer Kondensatorplatte (4, 5) auf der vom Formnest (13) weg weisenden Seite dienen und einen oder mehrere Hohlräume (15) ausbilden.

2. Werkzeug (1) nach Anspruch 1,
**dadurch gekennzeichnet,**
**dass** die Begrenzungswandung (10) mit im Wesentlichen konstanter Dicke ausgebildet ist.

3. Werkzeug (1) nach Anspruch 1 oder 2,
**dadurch gekennzeichnet,**
**dass** die Stützen (11, 12) etwa parallel zu einer Pressrichtung verlaufen, in welcher die Formhälften (2, 3) im Betrieb mit einer Presse (73) zusammengedrückt werden.

4. Werkzeug (1) nach einem der vorstehenden Ansprüche,
**dadurch gekennzeichnet,**
**dass** es Anschlüsse (64, 65) für ein Temperiermedium aufweist, das den einen oder die mehreren Hohlräume (15) durchströmen kann.

5. Werkzeug (1) nach einem der vorstehenden Ansprüche,
**dadurch gekennzeichnet;**
**dass** die wenigstens eine der beiden Formhälften (2, 3) zum Trimmen der Formhälfte (2, 3) mittels der einen oder der mehreren der Stützen (11, 12) und/oder des oder der mehreren Hohlräume (15) ausgebildet ist, um ein elektromagnetisches Feld im Formnest (13) zu beeinflussen.

6. Werkzeug (1) nach einem der vorstehenden Ansprüche,
**dadurch gekennzeichnet,**
**dass** der oder wenigstens einer der mehreren Hohlräume (15) eine Öffnung (14) aufweist, welche vorzugsweise zu der vom Formnest (13) abgewandten Seite weist, und durch welche ein Trimmkörper (30, 50) in den Hohlraum (15) einsetzbar ist,
wobei der oder wenigstens einer der mehreren Hohlräume (15) vorzugsweise ein Form- oder Rastelement (41, 43) zum Positionieren und/oder Fixieren eines Trimmkörpers (30, 50) in den Hohlraum (15) aufweist.

7. Werkzeug (1) nach einem der vorstehenden Ansprüche,
**dadurch gekennzeichnet,**
**dass** die wenigstens eine Formhälfte (2, 3) wenigstens einen Anschluss (132, 135) für ein insbesondere flüssiges oder öliges oder viskoses Trimmfluid aufweist, der mit wenigstens einem des einen oder der mehreren Hohlräume (15) verbunden ist, wobei vorzugsweise mehrere Hohlräume (15) untereinander fluidkommunizierend verbunden sind oder wenigstens Teilvolumina mehrerer Hohlräume (15) voneinander fluiddicht abgetrennt sind,
wobei vorzugsweise die wenigstens eine Formhälfte (2, 3) wenigstens einen Anschluss für Druckluft und/oder Vakuum aufweist, der mit wenigstens einem des einen oder der mehreren Hohlräume (15) verbunden ist, wobei vorzugsweise der wenigstens eine Anschluss für Druckluft und/oder Vakuum auf einer höheren Ebene angeordnet als der wenigstens eine Anschluss (132, 135) für ein Trimmfluid.

8. Werkzeug (1) nach Anspruch 4 oder 7,
**dadurch gekennzeichnet,**
**dass** die Hohlräume (15) durch Verbindungsöffnungen (63) in den Stützen (11, 12) verbunden sind, wobei die Verbindungsöffnungen (63) oder eine Gruppe von Verbindungsöffnungen (63) vorzugsweise mit wenigstens einem von in einer Seitenwandung (11) ausgebildeten Anschlüssen (64, 65, 132, 135) für Temperiermedium, Trimmfluid, Druckluft oder Vakuum fluchten/fluchtet.

9. Werkzeugsystem zum Herstellen von Partikelschaumstoffteilen;
**dadurch gekennzeichnet,**
**dass** das Werkzeugsystem ein Werkzeug (1) nach einem der Ansprüche 1 bis 8 umfasst und zumindest einen Trimmkörper (30, 50), der zum Einbringen in den oder wenigstens einen der Hohlräume (15) ausgebildet ist, und/oder eine Trimmfluid-Bereitstellungseinrichtung, die zum Versorgen der wenigstens einen Formhälfte (2, 3) mit einem Trimmfluid ausgebildet ist, aufweist,
wobei der Trimmkörper (30, 50) vorzugsweise aus einem Material mit einer relativen Permittivität (εr) von zumindest 2 ausgebildet ist.

10. Werkzeugsystem nach Anspruch 9,
**dadurch gekennzeichnet,**
**dass** der Trimmkörper (30, 50) aus einem Festkörper, insbesondere als Steckkörper zum Einstecken in den oder wenigstens einen der Hohlräume (15), ausgebildet ist oder durch Ausgießen eines oder mehrerer der Hohlräume (15) mittels eines aushärtenden Materials hergestellt ist,
wobei der Trimmkörper (30, 50) vorzugsweise ein Formelement (42) oder ein Rastelement zum Positionieren und/oder Fixieren in dem oder wenigstens einem der Hohlräume (15) aufweist oder mittels Reibschluss in dem oder wenigstens einem der Hohlräume (15) fixierbar ist.

11. Werkzeugsystem nach Anspruch 9 oder 10,
**dadurch gekennzeichnet,**
**dass** der Trimmkörper (30, 50) so ausgebildet ist, dass er nur einen Teilbereich des oder eines der Hohlräume (15) ausfüllt
wobei der Teilbereich vorzugsweise ein entfernt vom Formnest (13) angeordneter Teilbereich ist.

12. Werkzeugsystem nach einem der Ansprüche 9 bis 11,
**dadurch gekennzeichnet,**
**dass** es mehrere Trimmkörper (30, 50) in unterschiedlicher Größe und/oder aus unterschiedlichen Materialen, welche eine unterschiedliche relative Permittivität (εr) aufweisen, umfasst.

13. Werkzeugsystem nach einem der Ansprüche 9 bis 12,
**dadurch gekennzeichnet,**
**dass** es eine Anschlussplatte aufweist, die zwischen eine Kondensatorplatte (4, 5) und einer Formhälfte (2, 3) des Werkzeugs (1) oder auf einer von einer Formhälfte (2, 3) des Werkzeugs (1) abgewandten Seite einer Kondensatorplatte (4, 5) anzuordnen ist und die Medienanschlüsse und/oder Medienkanäle und/oder Medienöffnungen zur Zuführung und/oder Ableitung von Medien zu den Hohlräumen (15) der Formhälfte (2, 3) von bzw. nach außen aufweist,
wobei die Anschlussplatte vorzugsweise Rohrstücke (143, 145) aufweist, die bei bestimmungsgemäßer Montage der Anschlussplatte in die Hohlräumen (15) der Formhälfte (2, 3) ragen.

14. Verfahren zum Herstellen eines oder mehrerer Partikelschaumstoffteile durch Verschweißen von Schaumstoffpartikeln mittels elektromagnetischer Wellen, wobei ein Werkzeug (1) mit ein Formnest (13) bildenden Formhälften (2, 3) zwischen zwei Kondensatorplatten (4, 5) angeordnet wird, das Formnest (13) mit Schaumstoffpartikeln gefüllt wird, das Werkzeug (1) durch Annähern der beiden Formhälften (2, 3) geschlossen wird und das Werkzeug (1) mit den Schaumstoffpartikeln in dem Formnest (13) über die Kondensatorplatten (4, 5) eingebrachten elektromagnetischen Wellen, insbesondere Radio- oder Mikrowellen, ausgesetzt werden, wobei die Schaumstoffpartikel durch die elektromagnetischen Wellen sich erwärmen und wenigstens teilweise miteinander verschmelzen oder verbacken, wobei das Verfahren unter Verwendung eines Werkzeugs (1) nach einem der Ansprüche 1 bis 8 oder eines Werkzeugsystems nach einem der Ansprüche 9 bis 13 durchgeführt wird.

15. Verfahren nach Anspruch 14,
**dadurch gekennzeichnet,**
**dass** ein oder mehrere Trimmkörper (30, 50) oder ein Trimmfluid in dem oder wenigstens einem der Hohlräume (15) angeordnet wird bzw. werden, um ein elektromagnetisches Feld im Formnest (13) zu beeinflussen,
wobei vorzugsweise in Abhängigkeit von der Qualität der Verschweißung der Schaumstoffpartikel die Anordnung eines oder mehrerer Trimmkörper (30, 50) oder eines Trimmfluids im Werkzeug (1) verändert wird, um die Beeinflussung des elektromagnetischen Felds im Formnest (13) zu justieren,
und/oder die Anordnung eines oder mehrerer Trimmkörper (30, 50) oder eines Trimmfluids im Werkzeug (1) während eines Schäumvorgangs verändert wird, um ein elektromagnetisches Feld im Formnest (13) dynamisch zu beeinflussen.

## Claims

1. A mold (1) for producing particulate foam parts by welding foam particles by means of electromagnetic waves, comprising two mold halves (2, 3) which delimit a mold cavity (13), at least one, preferably each, of the two mold halves (2, 3) being formed from a material transparent to electromagnetic waves, and comprising a boundary wall (10) delimiting the mold cavity (13), and one or more supports (11, 12) which serve to support the boundary wall (10) at a capacitor plate (4, 5) on the side facing away from the mold cavity (13) and form one or more cavities (15).

2. The mold (1) according to claim 1,
**characterized in that**
the boundary wall (10) is formed with a substantially constant thickness.

3. The mold (1) according to claim 1 or 2,
**characterized in that**
the supports (11, 12) extend approximately parallel to a pressing direction in which the mold halves (2, 3) are pressed together in operation with a press (73).

4. The mold (1) according to any of the preceding claims,
**characterized in that**
it comprises connections (64, 65) for a tempering medium which can flow through the one or more cavities (15).

5. The mold (1) according to any of the preceding claims,
**characterized in that**
the at least one of the two mold halves (2, 3) is designed to trim the mold half (2, 3) by means of the one or more of the supports (11, 12) and/or the one or more cavities (15) to have an impact on an electromagnetic field in the mold cavity (13).

6. The mold (1) according to any of the preceding claims,
**characterized in that**
the one or at least one of the plurality of cavities (15) comprises an opening (14), which preferably faces the side facing away from the mold cavity (13), and through which a trim body (30, 50) can be inserted into the cavity (15),
wherein the one or at least one of the plurality of cavities (15) preferably comprises a form or latching element (41, 43) for positioning and/or fixing a trim body (30, 50) in the cavity (15).

7. The mold (1) according to any of the preceding claims,
**characterized in that**
the at least one mold half (2, 3) comprises at least one connection (132, 135) for a trimming fluid, in particular a liquid or oily or viscous trimming fluid, which connection is connected to at least one of the one or more cavities (15), preferably a plurality of cavities (15) being connected to one another in a fluid-communicating manner or at least partial volumes of several cavities (15) being separated from one another in a fluid-tight manner,
wherein preferably the at least one mold half (2, 3) comprises at least one connection for compressed air and/or vacuum connected to at least one of the one or more cavities (15), wherein preferably the at least one connection for compressed air and/or vacuum is arranged at a higher level than the at least one connection (132, 135) for a trimming fluid.

8. The mold (1) according to claim 4 or 7,
**characterized in that**
the cavities (15) are connected by connection openings (63) in the supports (11, 12), the connection openings (63) or a group of connection openings (63) preferably being aligned with at least one of connections (64, 65, 132, 135) for a temperature control medium, trimming fluid, compressed air or vacuum which are formed in a side wall (11).

9. A mold system for producing particulate foam parts,
**characterized in that**
the mold system comprises a mold (1) according to any of claims 1 to 8 and at least one trim body (30, 50) adapted to be introduced into the or at least one of the cavities (15) and/or a trimming fluid supply means adapted to supply the at least one mold half (2, 3) with a trimming fluid,
the trim body (30, 50) being preferably formed of a material having a relative permittivity (εr) of at least 2.

10. The mold system according to claim 9,
**characterized in that**
the trim body (30, 50) is formed from a solid body, in particular as a plug-in body for insertion into the or at least one of the cavities (15), or is produced by filling one or more of the cavities (15) by means of a curing material,
the trim body (30, 50) preferably comprising a form element (42) or a latching element for positioning and/or fixing in the or at least one of the cavities (15), or is fixable by means of frictional locking in the or at least one of the cavities (15).

11. The mold system according to claim 9 or 10,
**characterized in that**
the trim body (30, 50) is designed to fill only a partial area of the or one of the cavities (15), the partial area preferably being a partial area arranged remotely from the mold cavity (13).

12. The mold system according to any of claims 9 to 11,
**characterized in that**
it comprises a plurality of trim bodies (30, 50) of different sizes and/or of different materials having different relative permittivities (εr).

13. The mold system according to any of claims 9 to 12,
**characterized in that**
it comprises a connecting plate which is to be arranged between a condenser plate (4, 5) and a mold half (2, 3) of the mold (1) or on a side of a condenser plate (4, 5) facing away from a mold half (2, 3) of the mold (1) and which comprises media connections and/or media passages and/or media openings for supplying and/or discharging media to the cavities (15) of the mold half (2, 3) from or to the outside, respectively,
the connecting plate preferably having pipe pieces (143, 145) which project into the cavities (15) of the mold half (2, 3) when the connecting plate is mounted as intended.

14. A process of producing one or more particulate foam parts by welding foam particles by means of electromagnetic waves, wherein a mold (1) with mold halves (2, 3) forming a mold cavity (13) is arranged between two condenser plates (4, 5), the mold cavity (13) is filled with foam particles, the mold (1) is closed by bringing the two mold halves (2, 3) closer together, and the mold (1) together with the foam particles in the mold cavity (13) is exposed to electromagnetic waves, in particular radio waves or microwaves, which are introduced via the capacitor plates (4, 5), wherein the foam particles are heated by the electromagnetic waves and at least partially fuse or bond together, the process being performed using a mold (1) according to any of claims 1 to 8 or a mold system according to any of claims 9 to 13.

15. The process according to claim 14,
**characterized in that**
one or more trim bodies (30, 50) or a trimming fluid is/are arranged in the or at least one of the cavities (15) to have an impact on an electromagnetic field in the mold cavity (13),
wherein preferably depending on the quality of the welding of the foam particles, the arrangement of one or more trim bodies (30, 50) or a trimming fluid in the mold (1) is changed in order to adjust the impact on the electromagnetic field in the mold cavity (13),
and/or the arrangement of one or more trim bodies (30, 50) or a trimming fluid in the mold (1) is changed during a foaming process in order to have a dynamic impact on an electromagnetic field in the mold cavity (13).

## Revendications

1. Outil (1) pour la fabrication de pièces en mousse particulaire par soudage de particules de mousse moyennant des ondes électromagnétiques, comprenant deux moitiés de moule (2, 3), lesquelles délimitent une cavité de moule (13), sachant qu'au moins une, de préférence chacune, des deux moitiés de moule (2, 3) est constituée par un matériau transparent pour des ondes électromagnétiques et présente une paroi de délimitation (10) délimitant la cavité de moule (13) et un ou plusieurs supports (11, 12), lesquels servent à soutenir la paroi de délimitation (10) au niveau d'une plaque de condensateur (4, 5) du côté opposé à la cavité de moule (13) et constituent un ou plusieurs espaces creux (15).

2. Outil (1) selon la revendication 1,
**caractérisé en ce que**
la paroi de délimitation (10) est constituée avec une épaisseur sensiblement constante.

3. Outil (1) selon la revendication 1 ou 2,
**caractérisé en ce que**
les supports (11, 12) s'étendent de manière approximativement parallèle à une direction de presse, dans laquelle les moitiés de moule (2, 3) sont comprimées avec une presse (73) lors du fonctionnement.

4. Outil (1) selon l'une des revendications précédentes,
**caractérisé en ce que**
il présente des raccords (64, 65) pour un fluide de mise à température qui peut traverser l'un ou les plusieurs espaces creux.

5. Outil (1) selon l'une des revendications précédentes,
**caractérisé en ce que**
l'au moins une des deux moitiés de moule (2, 3) est constituée pour l'ajustement de la moitié de moule (2, 3) moyennant l'un ou les plusieurs des supports (11, 12) et/ou du ou des plusieurs espaces creux (15) pour influencer un champ électromagnétique dans la cavité de moule (13).

6. Outil (1) selon l'une des revendications précédentes,
**caractérisé en ce que**
le ou au moins un des plusieurs espaces creux (15) présente une ouverture (14), laquelle est de préférence tournée du côté opposé à la cavité de moule (13), et par laquelle un corps d'ajustement (30, 50) peut être inséré dans l'espace creux (15),
sachant que le ou au moins un des plusieurs espaces creux (15) présente de préférence un élément de forme ou d'encliquetage (41, 43) pour le positionnement et/ou la fixation d'un corps d'ajustement (30, 50) dans le corps creux (15).

7. Outil (1) selon l'une des revendications précédentes,
**caractérisé en ce que**
l'au moins une moitié de moule (2, 3) présente au moins un raccord (132, 135) pour un fluide d'ajustement en particulier liquide ou huileux ou visqueux, qui est relié à au moins un de l'un ou des plusieurs espaces creux (15), sachant que de préférence plusieurs espaces creux (15) sont reliés entre eux de manière fluidiquement communicante ou au moins des volumes partiels de plusieurs espaces creux (15) sont isolés les uns des autres de manière fluidiquement étanche,
sachant que de préférence l'au moins une moitié de moule (2, 3) présente au moins un raccord pour air comprimé et/ou vide, qui est relié à au moins un de l'un ou des plusieurs espaces creux (15), sachant que de préférence l'au moins un raccord pour air comprimé et/ou vide est disposé sur un plan plus élevé que l'au moins un raccord (132, 135) pour un fluide d'ajustement.

8. Outil (1) selon la revendication 4 ou 7,
**caractérisé en ce que**
les espaces creux (15) sont reliés par des ouvertures de liaison (63) dans les supports (11, 12), sachant que les ouvertures de liaison (63) un ou groupe d'ouvertures de liaison (63) sont/est de préférence en alignement avec au moins un de raccords (64, 65, 132, 135) pour fluide de mise à température, fluide d'ajustement, air comprimé et/ou vide constitués dans une paroi latérale (11).

9. Système d'outil pour la fabrication de pièces en mousse particulaire,
**caractérisé en ce que**
le système d'outil comprend un outil (1) selon l'une des revendications 1 à 8 et présente au moins un corps d'ajustement (30, 50) qui est constitué pour être placé dans le ou au moins un des espaces creux (15), et /ou un dispositif de mise à disposition de fluide d'ajustement qui est constitué pour alimenter l'au moins une moitié de moule (2, 3) en un fluide d'ajustement,
sachant que le corps d'ajustement (30, 50) est constitué de préférence par un matériau ayant une permissivité relative (εr) d'au moins 2.

10. Système d'outil selon la revendication 9,
**caractérisé en ce que**
le corps d'ajustement (30, 50) est constitué par un corps solide, en particulier comme corps enfichable destiné à être enfiché dans le ou au moins un des espaces creux (15), ou est fabriqué par garnissage d'un ou de plusieurs des espaces creux (15) moyennant un matériau durcissant,
sachant que le corps d'ajustement (30, 50) présente de préférence un élément de forme (42) ou un élément d'encliquetage pour le positionnement et/ou la fixation dans le ou au moins un des espaces creux (15) ou peut être fixé par adhérence dans le ou au moins un des espaces creux (15).

11. Système d'outil selon la revendication 9 ou 10,
**caractérisé en ce que**
le corps d'ajustement (30, 50) est constitué de telle manière qu'il ne remplisse qu'une zone partielle du ou d'un des espaces creux (15),
sachant que la zone partielle est de préférence une zone partielle disposée de manière éloignée de la cavité de moule (13).

12. Système d'outil selon l'une des revendications 9 à 11,
**caractérisé en ce que**
il comprend plusieurs corps d'ajustement (30, 50) de différente taille et/ou en différents matériaux, lesquels présentent une permissivité relative (εr) différente.

13. Système d'outil selon l'une des revendications 9 à 12,
**caractérisé en ce que**
il présente une plaque de raccordement qui doit être disposée entre une plaque de condensateur (4, 5) et une moitié de moule (2, 3) de l'outil (1) ou d'un côté d'une plaque de condensateur (4, 5) qui est opposé à une moitié de moule (2, 3) de l'outil (1) et qui présente des raccords de fluides et/ou canaux de fluides et/ou ouvertures de fluides pour l'amenée et/ou l'évacuation de fluides aux espaces creux (15) de la moitié de moule (2, 3) de ou vers l'extérieur,
sachant que la plaque de raccordement présente de préférence des éléments de tube (143, 145) qui, en cas de montage conforme à la destination de la plaque de raccordement, s'avancent dans les espaces creux (15) de la moitié de forme (2, 3).

14. Procédé pour la fabrication d'une ou de plusieurs pièces en mousse particulaire par soudage de particules de mousse moyennant des ondes électromagnétiques, sachant qu'un outil (1) comprenant des moitiés de moule (2, 3) qui forment une cavité de moule (13) est disposé entre deux plaques de condensateur (4, 5), la cavité de moule (13) est remplie de particules de mousse, l'outil (1) est fermé par rapprochement des deux moitiés de moule (2, 3) et l'outil (1) avec les particules de mousse dans la cavité de moule (13) est exposé à des ondes électromagnétiques, en particulier des ondes radio ou des microondes, introduites via les plaques de condensateur (4, 5), sachant que les particules de mousse se réchauffent sous l'effet des ondes électromagnétiques et fusionnent ou cuisent au moins partiellement les unes avec les autres, sachant que le procédé est exécuté en utilisant un outil (1) selon l'une des revendications 1 à 8 ou un système d'outil selon l'une des revendications 9 à 13.

15. Procédé selon la revendication 14,
**caractérisé en ce que**
un ou plusieurs corps d'ajustement (30, 50) ou un fluide d'ajustement est/sont disposé/s dans le ou au moins un des espaces creux (15) pour influencer un champ électromagnétique dans la cavité de moule (13),
sachant que, de préférence en fonction de la qualité du soudage des particules de mousse, la disposition d'un ou de plusieurs corps d'ajustement (30, 50) ou d'un fluide d'ajustement dans l'outil (1) est modifiée pour régler l'influence du champ électromagnétique dans la cavité de moule (13),
et/ou la disposition d'un ou de plusieurs corps d'ajustement (30, 50) ou d'un fluide d'ajustement dans l'outil (1) est modifiée pendant une opération de moussage pour influencer dynamiquement un champ électromagnétique dans la cavité de moule (13).
